# EUROPEAN PATENT APPLICATION

(11) **EP 4 823 148 A1**
(43) Date of publication of application: **14.10.2026**
(21) Application number: 24906313.2
(22) Date of filing: 16.12.2024
(51) Int. Cl.: H04W 24/02

(54) **COMMUNICATION METHOD AND APPARATUS**

(30) Priority: 22.12.2023 CN 202311788396
(71) Applicant: Huawei Technologies Co., Ltd., Shenzhen, Guangdong 518129 (CN)
(72) Inventor: QIAN, Bin, Shenzhen, Guangdong 518129 (CN); HUANG, Lei, Shenzhen, Guangdong 518129 (CN); MAO, Zhi, Shenzhen, Guangdong 518129 (CN); YANG, Xun, Shenzhen, Guangdong 518129 (CN)
(74) Representative: Huawei European IPR
(86) International application number: PCT/CN2024/139727
(87) International publication number: WO 2025/130832

(57) **Abstract**

A communication method and apparatus are applied to the AMP field, for example, may support wireless power transfer WPT, wireless local area network WLAN, or IEEE series protocols. An AMP STA receives a WPT signal from an excitation apparatus (or a first communication apparatus), and receives communication indication information from a relay apparatus (or the first communication apparatus) or an AP; and receives an excitation signal from the excitation apparatus (or the first communication apparatus), and sends a reflected signal of the excitation signal. The method can improve an interaction procedure between the AMP STA and another communication apparatus. For example, when a communication link between the AMP STA and the excitation apparatus (or the first communication apparatus) is a unidirectional communication link, a problem of backscatter self-interference can be resolved. For example, when a communication link between the AMP STA and the AP is a unidirectional communication link or the AMP STA communicates through the relay apparatus, a problem of unbalanced uplink and downlink can be resolved.

## Description

This application claims priority to Chinese Patent Application No. 202311788396.6, filed with the China National Intellectual Property Administration on December 22, 2023, and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

Conventional internet of things devices are usually provided with limited-lifespan batteries. Battery replacement requirements affect user experience. As internet of things networks and internet of things devices proliferate significantly, maintenance costs (including labor and battery costs) will also increase correspondingly. First, billions of batteries are discarded annually, with only a small fraction effectively recycled, causing harmful effects on the Earth's ecosystem. Second, maintaining the operation of internet of things networks and replacing batteries may be extremely difficult under harsh environmental conditions. In view of the foregoing problems, battery-free internet of things communication has been proposed, which can effectively improve network performance and sustainability and expand application scenarios. In addition, by removing the batteries, the size and costs of the device can be significantly reduced to support various new applications.

Ambient power (ambient power, AMP)-based internet of things can implement battery-free communication and meet requirements of various vertical applications. Such devices can collect power from different sources, including radio waves, light (sunlight), motion, heat, and the like, and therefore do not require conventional batteries. Ambient power-enabled internet of things differs from conventional Wi-Fi for the following reasons: (1) Wi-Fi devices are typically powered by conventional power sources. (2) The typical peak power of AMP devices is less than 1 milliwatt (considering the device size limitation), which is significantly lower than power consumption of conventional Wi-Fi devices (tens to hundreds of milliwatts). (3) Simple waveforms other than orthogonal frequency division multiplexing (orthogonal frequency division multiplexing, OFDM) can be used to reduce complexity and power consumption. The combination of AMP-enabled internet of things and Wi-Fi will facilitate new types of internet of things services, and Wi-Fi communication systems will benefit therefrom.

Therefore, how to deploy the AMP devices has to be resolved urgently.

### SUMMARY

Embodiments of this application provide a communication method and apparatus, which can improve an interaction procedure of an AMP device, thereby resolving a problem of unbalanced uplink and downlink, and/or a problem of self-interference in full-duplex backscatter.

In a first aspect, an embodiment of this application provides a communication method. The method is applied to an ambient power AMP station STA. The AMP STA may include an AMP device, or a chip, a functional module, or the like that can be disposed in the AMP device, and the method includes:
receiving a wireless power transfer (wireless power transfer, WPT) signal, and receiving communication indication information, where the communication indication information is information for indicating the AMP STA to perform communication; and receiving an excitation signal and sending a reflected signal of the excitation signal.

In this embodiment of this application, the WPT signal (or the excitation signal) and the communication indication information received by the AMP STA may come from different communication apparatuses, and the AMP STA may send the reflected signal to another communication apparatus. Therefore, the method improves an interaction procedure between the AMP STA and another communication apparatus.

In this embodiment of this application, when a communication link between the AMP STA and an excitation apparatus (or a first communication apparatus) is a unidirectional communication link from the excitation apparatus to the AMP STA, after the excitation apparatus (or the first communication apparatus) sends an excitation signal, the AMP STA receives the excitation signal, and a receive end of a reflected signal of the excitation signal is not the excitation apparatus (or the first communication apparatus). Therefore, a self-interference problem of full-duplex backscatter can be effectively resolved.

In this embodiment of this application, when the communication link between the AMP STA and an AP is a unidirectional communication link from the AMP STA to the AP, or when the AMP STA communicates by using a relay apparatus, a problem of unbalanced uplink and downlink can be effectively resolved.

In a possible implementation 1, the receiving the WPT signal includes: receiving the WPT signal from a first communication apparatus; the receiving the communication indication information includes: receiving the communication indication information from the first communication apparatus; and the receiving the excitation signal includes: receiving the excitation signal from the first communication apparatus.

In this embodiment of this application, the first communication apparatus can provide radio frequency (radio frequency, RF) energy (for example, send a WPT signal) for the AMP STA, and can also support long-distance communication. That is, the first communication apparatus can be configured to implement both a function of the excitation apparatus and a function of the relay apparatus.

For example, the receiving the WPT signal includes: receiving the WPT signal from the first communication apparatus by using a link 4; and the receiving the communication indication information includes: receiving the WPT signal from the first communication apparatus by using a link 2. For example, a link for transmitting the excitation signal is the link 4 or the link 2. For example, the link 2 is a unidirectional communication link.

In this embodiment of this application, the link 2 may be a unidirectional communication link from the first communication apparatus to the AMP STA. When the first communication apparatus sends an excitation signal, a receive end of a transmitted signal obtained after the excitation signal is reflected by the AMP STA is not the first communication apparatus (for example, the AP), that is, a transmit end and a receive end of backscatter communication are not a same device. In this way, the problem of backscatter self-interference can be effectively resolved, and difficulty of processing a signal by the AP can be reduced, for example, difficulty of processing a reflected signal by the AP is reduced.

In a possible implementation 1, the sending the reflected signal of the excitation signal includes: sending the reflected signal of the excitation signal to the access point (access point, AP).

For example, the sending the reflected signal of the excitation signal includes: sending the reflected signal of the excitation signal to the AP by using a link 3. For example, the link 3 may be a unidirectional communication link.

In this embodiment of this application, the link 3 may be a unidirectional communication link from the AMP STA to the AP. Because receiver sensitivity of the AP is better than that of the AMP STA, information sent by the AMP STA can be received by the AP. In this way, a problem of unbalanced uplink and downlink can be effectively resolved (or a problem of unbalanced uplink and downlink coverage is effectively resolved).

For example, the link 2 is a bidirectional communication link. For example, the link 3 is a bidirectional communication link.

For example, both the link 2 and the link 4 may support a frequency band of sub-1 GHz. For example, the link 2 may support a frequency band of 2.4 GHz, and the link 4 may support a frequency band of sub-1 GHz. For example, both the link 2 and the link 4 may support a frequency band of 2.4 GHz. For example, the link 2 may support a frequency band of sub-1 GHz, and the link 4 may support a frequency band of 2.4 GHz.

In a possible implementation 2, the receiving the WPT signal includes: receiving the WPT signal from an excitation apparatus; the receiving the communication indication information includes: receiving the communication indication information from a relay apparatus by using a link 4; and the receiving the excitation signal includes: receiving the excitation signal from the excitation apparatus.

For example, the receiving the WPT signal includes: receiving the WPT signal from the excitation apparatus by using a link 6.

For example, a link for transmitting the excitation signal may be the link 2 (or the link 6). For example, the link 2 may be a unidirectional communication link from the excitation apparatus to the AMP STA. In this way, a receive end and a transmit end of a transmitted signal obtained after the excitation signal is reflected by the AMP STA are not a same device, so that the problem of backscatter self-interference can be effectively resolved, and difficulty of processing a signal by the AP can be reduced.

For example, the link 4 is a unidirectional communication link. The link 4 is a unidirectional communication link from the relay apparatus to the AMP STA. Based on a long-distance communication function supported by the relay apparatus, the AMP STA can receive information from the AP. Therefore, the problem of unbalanced uplink and downlink can be effectively resolved.

For example, the link 2 may alternatively be a bidirectional communication link. For example, the link 4 may alternatively be a bidirectional communication link.

In a possible implementation 2, when the link 4 is a bidirectional link, the sending the reflected signal of the excitation signal includes: sending the reflected signals of the excitation signal to the relay apparatus by using the link 4; or when the link 4 is a unidirectional communication link, the sending the reflected signal of the excitation signal includes: sending the reflected signal of the excitation signal to the AP by using a link 5.

In a possible implementation 3, the receiving the WPT signal includes: receiving the WPT signal from an excitation apparatus; the receiving the communication indication information includes: receiving the communication indication information from a relay apparatus by using a link 3; and the receiving the excitation signal includes: receiving the excitation signal from the excitation apparatus.

For example, a link for transmitting the WPT signal is the link 5. As an example, a link for transmitting the excitation signal is the link 5. As another example, a link for transmitting the excitation signal is the link 4. For example, the link 4 is a unidirectional communication link from the excitation apparatus to the AMP STA.

In a possible implementation 3, the sending the reflected signal of the excitation signal includes: sending the reflected signal of the excitation signal to the relay apparatus by using the link 3.

In a possible implementation 4, the receiving the WPT signal includes: receiving the WPT signal from an excitation apparatus; the receiving the communication indication information includes: receiving the communication indication information from the AP by using the link 2; and the receiving the excitation signal includes: receiving the excitation signal from the excitation apparatus.

For example, a link for transmitting the WPT signal is the link 3. As an example, a link for transmitting the excitation signal is the link 3. As another example, a link for transmitting the excitation signal is the link 4. For example, the link 4 is a unidirectional communication link from the excitation apparatus to the AMP STA.

In a possible implementation 4, the sending the reflected signal of the excitation signal includes: sending the reflected signal of the excitation signal to the AP by using the link 2.

In a possible implementation, the frequency band supported by the communication link is different from the frequency band supported by the WPT link.

In a possible implementation, the frequency band supported by the communication link is the same as the frequency band supported by the WPT link, and the communication link is a unidirectional communication link.

According to a second aspect, an embodiment of this application provides a communication method. The method is applied to an excitation apparatus. The method includes:
receiving power transfer indication information from an access point AP, where the power transfer indication information is information for indicating an ambient power AMP station STA to receive a wireless power transfer WPT signal; and sending a WPT signal to the AMP STA based on the power transfer indication information.

In a possible implementation, the power transfer indication information includes at least one of an identifier of the AMP STA or wake-up information of the AMP STA.

In a possible implementation, the power transfer indication information further includes at least one of the following: transmission time of the WPT signal, waveform information of the WPT signal, and wake-up information of the excitation apparatus.

In a possible implementation, the communication indication information includes at least one of the following: control information, scheduling information, and a data type that are to be reported by the AMP STA.

In a possible implementation, sending the WPT signal to the AMP STA based on the power transfer indication information includes: sending the WPT signal to the AMP STA on a WPT link based on the power transfer indication information.

In a possible implementation, the method further includes: sending an excitation signal to the AMP STA on a communication link.

In a possible implementation, the frequency band supported by the communication link is different from the frequency band supported by the WPT link.

In a possible implementation, the method further includes: sending occupation indication information on the communication link, where the occupation indication information indicates that the communication link is occupied.

In a possible implementation, the frequency band supported by the communication link is the same as the frequency band supported by the WPT link, and the communication link is a unidirectional communication link.

In a possible implementation, the frequency band supported by the WPT link includes 2.4 GHz or lower than 1 GHz.

According to a third aspect, an embodiment of this application provides a communication method. The method is applied to a relay apparatus. The method includes:
receiving communication indication information from an AP, and sending the communication indication information to an AMP STA, where the communication indication information is information for indicating the AMP STA to perform communication.

In a possible implementation, the method further includes: receiving ACK information for the communication indication information from the AMP STA.

For example, the ACK information is carried in a reflected signal.

According to a fourth aspect, an embodiment of this application provides a communication method. The method is applied to a first communication apparatus. The method includes:
receiving indication information from an access point AP, where the indication information includes power transfer indication information; and sending a wireless power transfer WPT signal to an AMP STA based on the power transfer indication information, where the power transfer indication information is information for indicating the AMP STA to receive the WPT signal.

In a possible implementation, the indication information further includes communication indication information, and the communication indication information is information for indicating the AMP STA to perform communication.

In a possible implementation, the method further includes: sending ACK information for the indication information to the AP.

According to a fifth aspect, an embodiment of this application provides a communication method. The method is applied to an AP. The AP may include a Wi-Fi device, or a chip, a functional module, or the like that can be disposed in the Wi-Fi device, and the method includes:
sending power transfer indication information, where the power transfer indication information is information for indicating an ambient power AMP station STA to receive a wireless power transfer WPT signal; and sending communication indication information, where the communication indication information is information for indicating the AMP STA to perform communication.

For detailed descriptions of the second aspect to the fifth aspect, refer to the first aspect. Repeated parts are not described again.

According to a sixth aspect, an embodiment of this application provides an AMP STA, configured to perform the method in the first aspect or any possible implementation thereof. The AMP STA includes a module configured to perform the method in the first aspect or any possible implementation thereof.

According to a seventh aspect, an embodiment of this application provides an excitation apparatus, configured to perform the method in the second aspect or any possible implementation thereof. The excitation apparatus includes a module configured to perform the method in the second aspect or any possible implementation thereof.

According to an eighth aspect, an embodiment of this application provides a relay apparatus, configured to perform the method in the third aspect or any possible implementation thereof. The relay apparatus includes a module configured to perform the method in the third aspect or any possible implementation thereof.

According to a ninth aspect, an embodiment of this application provides a first communication apparatus, configured to perform the method in the fourth aspect or any possible implementation thereof. The first communication apparatus includes a module configured to perform the method in the fourth aspect or any possible implementation thereof.

According to a tenth aspect, an embodiment of this application provides an AP, configured to perform the method in the fifth aspect or any possible implementation thereof. The AP includes a module configured to perform the method in the fifth aspect or any possible implementation thereof.

According to an eleventh aspect, an embodiment of this application provides a communication apparatus. The communication apparatus includes a processor, configured to perform the method in one of the first aspect to the fifth aspect or any possible implementation thereof. The processor is configured to execute a program stored in a memory. When the program is executed, the foregoing method is performed.

In a possible implementation, the memory is located outside the communication apparatus.

In a possible implementation, the memory is located inside the communication apparatus.

In this embodiment of this application, the processor and the memory may alternatively be integrated into one component. In other words, the processor and the memory may alternatively be integrated together. For example, the communication apparatus may be a chip.

In a possible implementation, the communication apparatus further includes a transceiver. The transceiver is configured to receive information or send information.

For example, the communication apparatus may be any one of the following: an AMP STA, an excitation apparatus, a relay apparatus, a first communication apparatus, and an AP. When the communication apparatus is one of the foregoing items, the communication apparatus may be configured to perform the method implemented by the corresponding apparatus.

According to a twelfth aspect, an embodiment of this application provides a communication apparatus. The communication apparatus includes a logic circuit and an interface. The logic circuit is coupled to the interface. The interface is configured to input and/or output information. The logic circuit is configured to perform the method in one of the first aspect to the fifth aspect or any possible implementation thereof.

For example, the communication apparatus may be any one of the following: an AMP STA, an excitation apparatus, a relay apparatus, a first communication apparatus, and an AP. When the communication apparatus is one of the foregoing items, the communication apparatus may be configured to perform the method implemented by the corresponding apparatus.

According to a thirteenth aspect, an embodiment of this application provides a computer-readable storage medium, where the computer-readable storage medium is configured to store a computer program, and when the computer program is run on a computer, the method in any one of the first aspect to the fifth aspect or any possible implementation thereof is performed.

According to a fourteenth aspect, an embodiment of this application provides a computer program product, and when the computer program product is run on a computer, the method in any one of the first aspect to the fifth aspect or any possible implementation thereof is performed.

According to a fifteenth aspect, an embodiment of this application provides a computer program, and when the computer program is run on a computer, the method in any one of the first aspect to the fifth aspect or any possible implementation thereof is performed.

According to a sixteenth aspect, an embodiment of this application provides a communication system, where the communication system includes an AMP STA and an excitation apparatus, the AMP STA is configured to perform the method in the first aspect or any possible implementation of the first aspect, and the excitation apparatus is configured to perform the method in the second aspect or any possible implementation of the second aspect.

In a possible implementation, the communication system further includes a relay apparatus, and the relay apparatus is configured to perform the method in the third aspect or any possible implementation of the third aspect.

In a possible implementation, the communication system further includes an AP, and the AP is configured to perform the method in the fifth aspect or any possible implementation of the fifth aspect.

According to a seventeenth aspect, an embodiment of this application provides a communication system, where the communication system includes an AMP STA and a first communication apparatus, the AMP STA is configured to perform the method in the first aspect or any possible implementation of the first aspect, and the first communication apparatus is configured to perform the method in the fourth aspect or any possible implementation of the fourth aspect.

In a possible implementation, the communication system further includes an AP, and the AP is configured to perform the method in the fifth aspect or any possible implementation of the fifth aspect.

### BRIEF DESCRIPTION OF DRAWINGS

FIG. 1 is a diagram of an architecture of a communication system according to an embodiment of this application;
FIG. 2 is a diagram of backscatter communication according to an embodiment of this application;
FIG. 3 is a diagram of another backscatter communication according to an embodiment of this application;
FIG. 4a is a diagram of a topology structure of a communication system according to an embodiment of this application;
FIG. 4b is a schematic flowchart of a communication method according to an embodiment of this application;
FIG. 5a is a diagram of a topology structure of a communication system according to an embodiment of this application;
FIG. 5b is a schematic flowchart of a communication method according to an embodiment of this application;
FIG. 6a is a diagram of a topology structure of a communication system according to an embodiment of this application;
FIG. 6b is a schematic flowchart of a communication method according to an embodiment of this application;
FIG. 7a is a diagram of a topology structure of a communication system according to an embodiment of this application;
FIG. 7b is a schematic flowchart of a communication method according to an embodiment of this application;
FIG. 8 is a diagram of a topology structure of a communication system according to an embodiment of this application;
FIG. 9a is a diagram of a topology structure of a communication system according to an embodiment of this application;
FIG. 9b is a schematic flowchart of a communication method according to an embodiment of this application;
FIG. 10 is a diagram of a topology structure of a communication system according to an embodiment of this application;
FIG. 11a is a diagram of a topology structure of a communication system according to an embodiment of this application;
FIG. 11b is a schematic flowchart of a communication method according to an embodiment of this application;
FIG. 12 is a diagram of a topology structure of a communication system according to an embodiment of this application;
FIG. 13 is a diagram of a topology structure of a communication system according to an embodiment of this application;
FIG. 14 is a diagram of a topology structure of a communication system according to an embodiment of this application;
FIG. 15 is a diagram of a topology structure of a communication system according to an embodiment of this application;
FIG. 16 is a diagram of a topology structure of a communication system according to an embodiment of this application;
FIG. 17a is a diagram of a topology structure of a communication system according to an embodiment of this application;
FIG. 17b is a diagram of a topology structure of a communication system according to an embodiment of this application;
FIG. 17c is a schematic flowchart of a communication method according to an embodiment of this application;
FIG. 18 is a diagram of a structure of a communication apparatus according to an embodiment of this application;
FIG. 19 is a diagram of a structure of a communication apparatus according to an embodiment of this application; and
FIG. 20 is a diagram of a structure of a communication apparatus according to an embodiment of this application.

### DESCRIPTION OF EMBODIMENTS

For ease of understanding technical solutions in this application, the following further describes this application with reference to accompanying drawings.

Terms "first", "second", and the like in the specification, claims, and accompanying drawings of this application are merely used to distinguish between different objects, and are not used to describe a specific order. In addition, terms such as "include" and "have" and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

"Embodiments" mentioned herein mean that specific features, structures, or characteristics described in combination with embodiments may be included in at least one embodiment of this application. The phrase shown in various locations in the specification may not necessarily refer to a same embodiment, and is not an independent or optional embodiment exclusive from another embodiment. It may be understood explicitly and implicitly by a person skilled in the art that embodiments described herein may be combined with other embodiments.

In this application, "at least one (item)" means one or more, "a plurality of" means two or more, "at least two (items)" means two or three or more, and "and/or" is used to describe an association relationship between associated objects, which indicates that three relationships may exist. For example, "A and/or B" may indicate: only A exists, only B exists, and both A and B exist. A and B may be singular or plural. "Or" indicates that two relationships may exist, for example, only A exists and only B exists. When A and B are not mutually exclusive, it may indicate that three relationships exist, for example, only A exists, only B exists, and both A and B exist. The character "/" generally indicates an "or" relationship between the associated objects. "At least one of the following" or a similar expression thereof means any combination of these items. For example, at least one item (piece) of a, b, or c may represent a, b, c, "a and b", "a and c", "b and c", or "a, b, and c".

In this application, the "indication" may include a direct indication, an indirect indication, an explicit indication, and an implicit indication. When a piece of indication information is described as indicating A, it may be understood that the indication information carries A, directly indicates A, or indirectly indicates A.

In this application, information indicated by indication information is referred to as to-be-indicated information. In a specific implementation process, there are many manners of indicating the to-be-indicated information. For example, the manners include but are not limited to a manner in which the to-be-indicated information, for example, the to-be-indicated information or an index of the to-be-indicated information, may be directly indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent. In addition, the to-be-indicated information may be sent as a whole, or may be divided into a plurality of pieces of sub-information to be sent separately, where sending periodicities and/or sending occasions of these pieces of sub-information may be the same or different.

In this application, "sending" and "receiving" indicate signal transmission directions. For example, "sending information to XX" may be understood as that a destination end of the information is XX, and may include direct sending through an air interface, or include indirect sending through an air interface by another unit or module. "Receiving information from YY" may be understood as that a source end of the information is YY, and may include direct receiving from YY through an air interface, or may include indirect receiving from YY through an air interface from another unit or module. "Sending" may also be understood as "outputting" of a chip interface, and "receiving" may also be understood as "inputting" of the chip interface. In other words, sending and receiving may be performed between devices, for example, between a network device and a terminal device; or may be performed inside a device, for example, sending or receiving between components, modules, chips, software modules, or hardware modules inside the device through a bus, a cable, or an interface.

The following describes a communication system in embodiments of this application.

The technical solutions provided in embodiments of this application may be applied to the AMP field, for example, may support wireless power transfer (wireless power transfer, WPT), wireless local area network (wireless local area network, WLAN), or Institute of Electrical and Electronics Engineers (institute of electrical and electronics engineers, IEEE) series protocols. For example, an AMP device in the AMP field may meet at least one of the following features: (1) At least one data communication mode exists on a frequency band lower than 1 GHz (sub-1 GHz). (2) At least one data communication mode exists on a frequency band of 2.4 GHz, and a communication access category (access category, AC) is set to background (background, AC_BK). (3) At least one wireless power transfer (wireless power transfer, WPT) mode exists on the frequency band of sub-1 GHz and indicates radio frequency (radio frequency, RF) energy harvesting (energy harvesting). For example, an application scenario of the AMP includes but is not limited to a smart home, a smart farm, a smart factory, logistics/warehousing, supermarket distribution, indoor positioning, a data center, and the like. The WPT shown in embodiments of this application may also be referred to as wireless power transfer or power transfer.

For example, the method provided in embodiments of this application may be applied to IEEE 802.11 series protocols, such as the 802.11a/b/g protocol, the 802.11n protocol, the 802.11ac protocol, the 802.11ax protocol, the 802.11be protocol, the 802.11bn protocol, or a next-generation protocol. Examples are not enumerated one by one herein. The technical solutions provided in embodiments of this application may be further applied to a wireless personal area network (wireless personal area network, WPAN) based on millimeter wave (millimeter wave, MMW) and ultra wideband (ultra wideband, UWB) technologies. For example, the method provided in embodiments of this application may be applied to IEEE 802.15 series protocols such as the 802.15.4a protocol, the 802.15.4z protocol, the 802.15.4ab protocol, or a future-generation UWB WPAN protocol. Examples are not enumerated herein. The technical solutions provided in embodiments of this application may be further applied to the following communication systems, for example, an internet of things (internet of things, IoT) system, vehicle-to-everything (vehicle-to-everything, V2X, where X may represent anything), device-to-device (device-to-device, D2D), a narrow band internet of things (narrow band internet of things, NB-IoT) system, a long term evolution (long term evolution, LTE) system, a 5th generation (5th generation, 5G) communication system, a new communication system emerging in future communication development, and the like. For example, the V2X may include vehicle-to-vehicle (vehicle-to-vehicle, V2V), vehicle-to-infrastructure (vehicle-to-infrastructure, V2I), vehicle-to-pedestrian (vehicle-to-pedestrian, V2P) communication, or vehicle-to-network (vehicle-to-network, V2N) communication.

With popularization of AMP application scenarios, an AMP system will be applied to more scenarios or industries, for example, applied to the internet of things industry, the internet of vehicles industry, or the banking industry, or applied to enterprise offices, stadiums, exhibition halls, concert halls, hotel rooms, dormitories, wards, classrooms, supermarkets, squares, streets, production workshops, or warehouses. Certainly, a device that supports AMP may be a sensor node (for example, a smart water meter, a smart electricity meter, or a smart air detection node) in a smart city, a smart device (for example, a smart camera, a projector, a display, a television, a speaker, a refrigerator, and a washing machine) in a smart home, an internet of things node, an entertainment terminal (for example, a wearable device like an augmented reality (augmented reality, AR) device or a virtual reality (virtual reality, VR) device), a smart device (for example, a printer, a projector, a loudspeaker, or a speaker) in smart office, an internet of vehicles device in the internet of vehicles, an infrastructure in a daily life scenario (for example, a vending machine, a self-service navigation console of a supermarket, a self-service cashier device, and a self-service ordering machine), a device in a large sports and music venue, and the like.

Although embodiments of this application mainly use a network in the IEEE 802.11 series standards as an example, aspects in embodiments of this application may also be extended to another network using various standards or protocols, for example, Bluetooth (Bluetooth), a high performance radio LAN (high performance radio LAN, HIPERLAN) (a wireless standard similar to the IEEE 802.11 standard), a wide area network (WAN), or other networks known or developed in the future.

In a possible implementation, the method provided in embodiments of this application may be implemented by a communication apparatus in a communication system. For example, the communication apparatus may be an access point (access point, AP) or a station (station, STA).

The AP is an apparatus having a wireless communication function, supports communication, sensing, or power transfer by using a WLAN protocol or an AMP protocol, and has a function of power transfer, communicating, or sensing with another device (for example, a non-access point station (non-access point station, non-AP STA), an AMP STA, or another access point) in a WLAN network or an AMP network. The access point is equivalent to a bridge that connects a wired network and a wireless network, and is mainly used to connect various wireless network clients together and then connect the wireless network to the Ethernet. The apparatus having the wireless communication function may be an entire device, or may be a chip, a processing system, a functional module, or the like mounted in an entire device. The device in which the chip, the processing system, or the functional module is mounted may implement a method, a function, and the like in embodiments of this application under control of the chip, the processing system, or the functional module. The AP in embodiments of this application is an apparatus that provides a service for the non-AP STA or the AMP STA, and may support the 802.11 series protocols, subsequent protocols, or the like. For example, the access point may be an access point for a terminal (for example, a mobile phone) to access a wired (or wireless) network, and is mainly deployed in a home, a building, and a park. A typical coverage radius is tens to hundreds of meters. Certainly, the access point may alternatively be deployed outdoors. For another example, the AP may be a communication entity, for example, a communication server, a router, a switch, or a bridge, or the AP may include various forms of macro base stations, micro base stations, relay stations, and the like. For another example, the AP may be configured to transmit power for the AMP STA, and the like. Certainly, the AP may alternatively be a chip, a processing system, or a module in the foregoing devices in various forms, to implement a method and a function in embodiments of this application.

The STA is an apparatus having a wireless communication function, supports communication or sensing by using a WLAN protocol, and has a capability of communicating or sensing with another non-AP STA or access point in a WLAN network; or supports harvesting RF energy by using an AMP protocol, and has a capability of communicating or sensing with another AMP STA or AP in an AMP network. For example, a STA is any user communication device that allows a user to communicate or sense or transfer power with an AP and thereby communicate via a WLAN or AMP. For another example, the STA is a device that can perform RF radio frequency harvesting by using an excitation apparatus. The apparatus having the wireless communication function may be an entire device, or may be a chip, a processing system, a functional module, or the like mounted in an entire device. The device in which the chip, the processing system, or the functional module is mounted may implement a method, a function, and the like in embodiments of this application under control of the chip, the processing system, or the functional module. For example, the STA may be a wireless communication chip, a wireless sensor, or a wireless communication terminal, and may also be referred to as a user. For another example, the STA may be a mobile phone that supports a Wi-Fi communication function, a tablet computer that supports a Wi-Fi communication function, a set-top box that supports a Wi-Fi communication function, a smart television that supports a Wi-Fi communication function, a smart wearable device that supports a Wi-Fi communication function, a vehicle-mounted communication device that supports a Wi-Fi communication function, or a computer that supports a Wi-Fi communication function. Certainly, the STA may alternatively be a chip, a processing system, or a module in the foregoing devices in various forms, to implement a method and a function in embodiments of this application. The description of the STA herein is also applicable to the AMP STA shown in embodiments of this application.

For example, a communication system to which the method provided in embodiments of this application may be applied may include an access point and a station. For example, embodiments of this application may be applied to a scenario of communication or sensing between an AP and a STA, between APs, or between STAs in a WLAN. This is not limited in embodiments of this application. Optionally, the AP may communicate with or sense a single STA, or the AP may simultaneously communicate with or sense a plurality of STAs. Specifically, communication or sensing between the AP and the plurality of STAs may be classified into downlink transmission in which the AP simultaneously sends signals to the plurality of STAs and uplink transmission in which the plurality of STAs send signals to the AP. A WLAN communication protocol may be supported between an AP and a STA, between APs, or between STAs. The communication protocol may include IEEE 802.11 series protocols, for example, the 802.11bn protocol. Certainly, protocols subsequent to 802.11bn may also be supported.

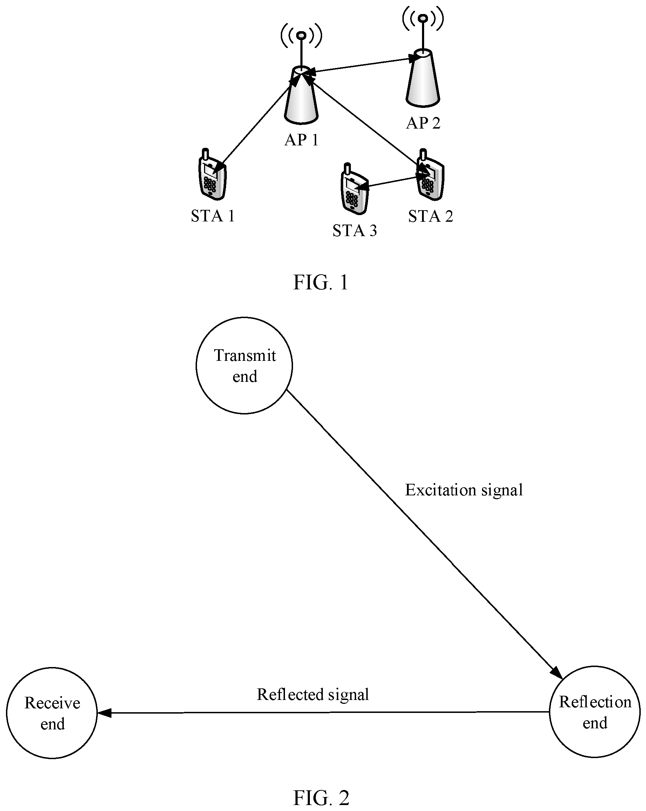

FIG. 1 is a diagram of an architecture of a communication system according to an embodiment of this application. The communication system may include one or more APs and one or more STAs. FIG. 1 shows two access points: an AP 1 and an AP 2, and three stations: a STA 1, a STA 2, and a STA 3.

In an example, the method provided in this embodiment of this application may be applied to data communication, sensing, wireless power transfer, or the like between one AP and one or more STAs, for example, communication, sensing, or wireless power transfer between the AP 1 and the STA 1 shown in FIG. 1, communication, sensing, or wireless power transfer between an AP and a STA shown in FIG. 1, and communication, sensing, or wireless power transfer between the AP 1 and each of the STA 1 and the STA 2 shown in FIG. 1. In another example, the method provided in this embodiment of this application may be applied to communication between APs, for example, communication between the AP 1 and the AP 2 shown in FIG. 1. In still another example, the method provided in this embodiment of this application may be applied to communication, sensing, or wireless power transfer between STAs, for example, communication, sensing, or wireless power transfer between the STA 2 and the STA 3 shown in FIG. 1.

In FIG. 1, an example in which the STA is a mobile phone and the AP is a router is used. This does not mean that types of the AP and the STA in embodiments of this application are limited. In addition, a quantity of APs and a quantity of STAs shown in FIG. 1 are merely examples. In specific implementation, the quantity of APs or the quantity of STAs may be greater or less. This is not limited in this embodiment of this application.

The following describes terms related in embodiments of this application.

### 1. AMP station (station, STA)

In embodiments of this application, the AMP STA may be a low-power IoT device that supports RF energy harvesting (energy harvesting). The essence of RF energy harvesting is to convert RF energy such as an RF signal into electric energy such as direct current (direct current, DC) (RF-DC). For example, the AMP STA may convert RF (a WPT signal shown below) harvested by the AMP STA into DC. For example, the AMP STA may convert the RF energy obtained by the AMP STA into electric energy, and store the electric energy in an energy storage unit (such as a capacitor or a battery), or may directly use the electric energy to drive a logic circuit, a digital chip, a sensor component, or the like after harvesting, so as to complete at least one of the following functions: modulating a reflected signal, sending a reflected signal, and harvesting and processing sensing information.

A name of the AMP STA shown in embodiments of this application is merely an example. As a standard progresses, a device that can convert RF energy into electric energy DC or a device that can implement radio frequency energy harvesting may have another name. This is not limited in embodiments of this application. The AMP STA shown herein converting the RF energy harvested by the AMP STA into the electric energy is only an example. For example, the AMP STA may alternatively convert the RF energy into other energy, and the other energy may be used to implement a function similar to that of the electric energy.

For example, classification of the AMP STA may include a type A, a type B, and a type C. Certainly, classification of the AMP STA herein is merely an example. For example, as the standard progresses, the AMP STA may be further classified in another manner subsequently. This is not limited in embodiments of this application. The following describes, by using an example, features that the type A to the type C meet.

A type A (or referred to as the A type) AMP STA may meet at least one of the following: ambient power is a part of an energy source of the AMP STA, has a relatively strong communication capability, has a relatively large energy storage capability, supports an existing Wi-Fi protocol (for example, IEEE 802.11b/g/n/ac/ax/be/bn), and supports a relatively complex PPDU structure. The Wi-Fi protocol shown herein is merely an example. As the standard progresses, the type A AMP STA subsequently may also support a next-generation Wi-Fi protocol, and the like. This is not limited in embodiments of this application. The relatively strong communication capability shown herein may be relative to the type B AMP STA and the type C AMP STA. For example, the type A AMP STA may process a PPDU whose modulation scheme is OFDM modulation, and for another example, the type A AMP STA may support series protocols such as IEEE 802.11b/g/n. The relatively large energy storage capability shown herein is relative to the type B AMP STA and the type C AMP STA. For example, the type A AMP STA may be provided with a power supply. For example, the relatively complex PPDU may be a PPDU modulated by using OFDM, and the relatively complex PPDU is relative to a PPDU modulated by using OOK.

The type B (or referred to as the B type) AMP STA may meet at least one of the following: active signal transmission is supported, and power transfer and data transmission may be decoupled. For example, the type B AMP STA may not support an existing Wi-Fi protocol, but supports active signal transmission. Power transfer and data transmission are decoupled. For example, the type B AMP STA may perform communication by using energy stored in the type B AMP STA, or may perform communication by receiving a WPT signal and using electric energy converted from the WPT signal. For example, electric energy that can be stored by the type B AMP STA may be greater than or equal to a first threshold. A specific value of the first threshold is not limited in embodiments of this application.

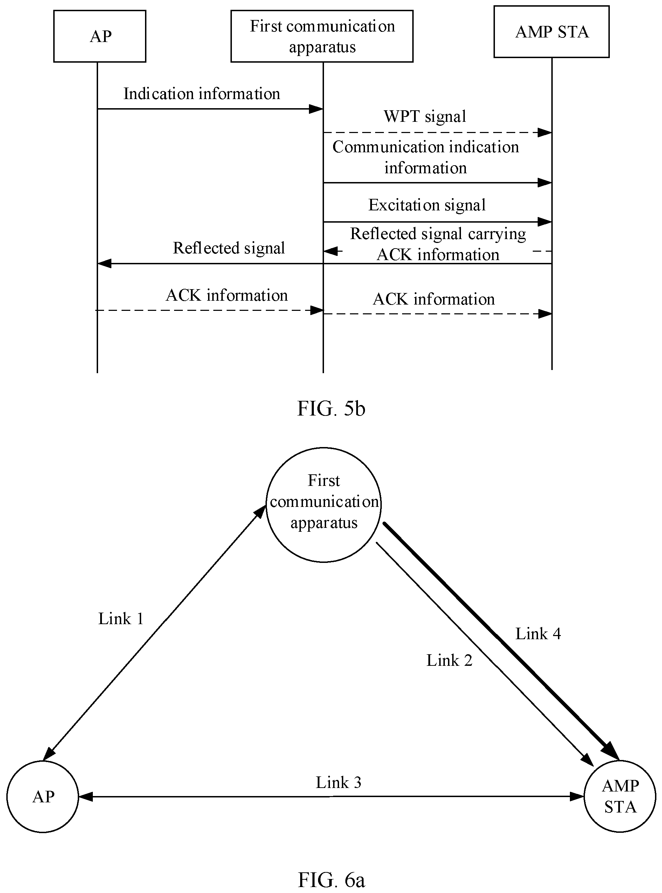

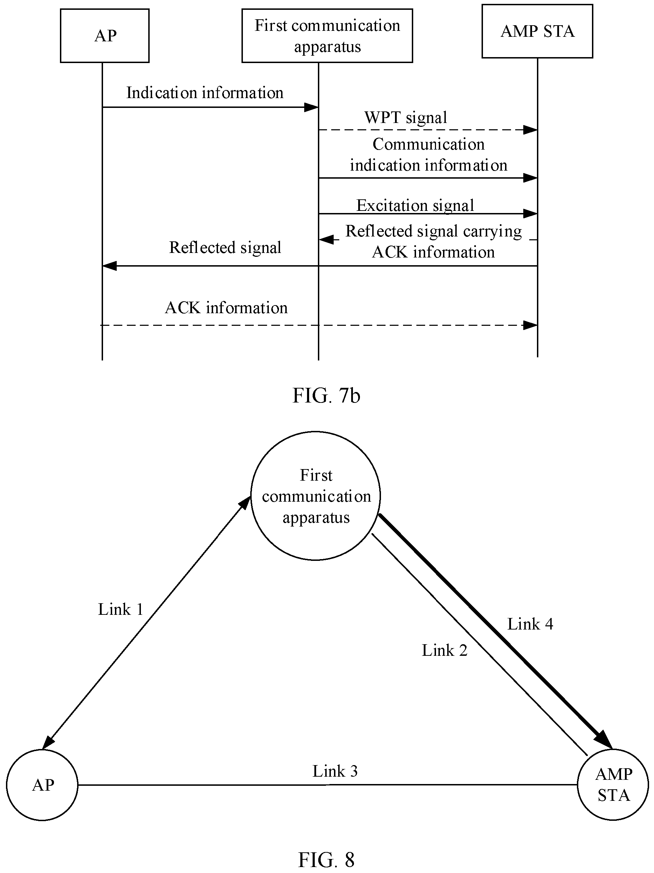

The type C (or referred to as the C type) AMP STA may meet at least one of the following: backscatter communication (backscatter) is supported, and power transfer and data transmission may be coupled. For example, that backscatter communication is supported may be understood as that such an AMP STA needs an excitation signal to implement an objective of sending a signal. In the following topology structure, the AMP STA may send ACK information or the like by receiving an excitation signal (for example, an excitation signal represented by a dashed line in FIG. 5b, or an excitation signal represented by a dashed line in FIG. 7b). Power transfer and data transmission shown herein are coupled. For example, before communication, the AMP STA of this type needs a WPT signal to provide energy; or the AMP STA of this type needs to harvest RF energy to implement communication; or an energy storage capability of the AMP STA of this type is lower than that of the type B AMP STA and the type A AMP STA. For example, electric energy that can be stored by the type C AMP STA may be less than or equal to a second threshold. A specific value of the second threshold is not limited in embodiments of this application. For example, the second threshold may be equal to 0.

The foregoing three types of AMP STAs all have an RF energy harvesting capability. For the foregoing three types of AMP STAs, in terms of an energy storage capability, the type A > the type B > the type C. In terms of a communication capability, the type A > the type B > the type C. In terms of power consumption, the type A > the type B > the type C, that is, the type C has lowest power consumption.

Generally, in a capability exchange phase, the AMP STA may declare a device type of the AMP STA. If the AMP STA is a type C AMP STA, the AMP STA needs to further declare whether the AMP STA supports a low noise amplifier (low noise amplifier, LNA), or whether the AMP STA has a relatively strong energy storage capability. Alternatively, a device (such as an AP or a first communication apparatus) that needs to interact with the AMP STA may learn of a capability of the AMP STA in a specific manner, for example, the energy storage capability or whether the AMP STA supports an LNA. Different types affect transmission time of the WPT signal. For example, when the energy storage capability is relatively strong, it indicates that charging time required by the AMP STA is relatively short. For another example, when the energy storage capability is relatively weak, it indicates that charging time required by the AMP STA is relatively long. Alternatively, a device that needs to interact with the AMP STA may learn of a power status of the AMP STA (for example, the type A or the type B) in a specific manner. Different power statuses may affect transmission time of the WPT signal, and the like.

### 2. WPT signal and WPT link

As shown above, the AMP STA may convert the RF energy harvested by the AMP STA into the electric energy. In embodiments of this application, the RF may include a WPT signal. For example, after receiving the WPT signal, the AMP STA may convert the WPT signal into DC. Certainly, a name of the WPT signal shown in embodiments of this application is merely an example. For example, the WPT signal may also be referred to as a power transfer signal, a signal used for radio frequency energy harvesting, or the like. A specific name of the WPT signal is not limited in embodiments of this application.

A link used to transmit a WPT signal may be referred to as a WPT link. That is, the WPT link may be used to transmit a WPT signal. The WPT link may also be referred to as a power transfer link or the like. A specific name of the WPT link is not limited in embodiments of this application.

### 3. Communication link

The communication link may be used to transmit uplink data or downlink data.

The WPT link and the communication link shown in embodiments of this application are distinguished from each other in terms of functions. In specific implementation, frequency bands supported by the two links may be the same or different.

A link used to transmit an excitation signal shown below may be a WPT link, or may be a communication link. This is not limited in embodiments of this application. For example, a link used to transmit a reflected signal shown below may be a communication link, or the link used to transmit the reflected signal may be another link, or the like. This is not limited in embodiments of this application.

A link used to transmit power transfer indication information, excitation indication information, or communication indication information shown below may be a communication link.

### 4. Backscatter communication (backscatter)

Backscatter communication is based on the principle of radio reflection, and the purpose of communication is achieved by reflecting a signal. A name of backscatter communication may also be referred to as backscattering communication, back scatter communication, or the like.

A transmit end of backscatter communication (also referred to as an excitation source of backscatter communication) may be configured to transmit an excitation signal. A reflection end of backscatter communication may reflect an excitation signal. The reflection end may transmit information by using a reflected signal of the excitation signal. For example, because the reflected signal and the excitation signal fluctuate due to reflection of the excitation signal by the reflection end, the fluctuation can be used for transmitting information. For example, a receive end of the backscatter communication may learn of, based on the foregoing fluctuation, information that needs to be transmitted by the reflection end. Generally, the excitation signal and the reflected signal may be transmitted at the same time. "At the same time" herein may be understood that the excitation signal and the reflected signal are transmitted in a same time period, or there is a specific time difference between transmission start time of the excitation signal and transmission start time of the reflected signal, and the time difference is less than a specific value.

As an example, FIG. 2 is a diagram of backscatter communication according to an embodiment of this application. As shown in FIG. 2, a transmit end in backscatter communication and a receive end in backscatter communication may be different devices.

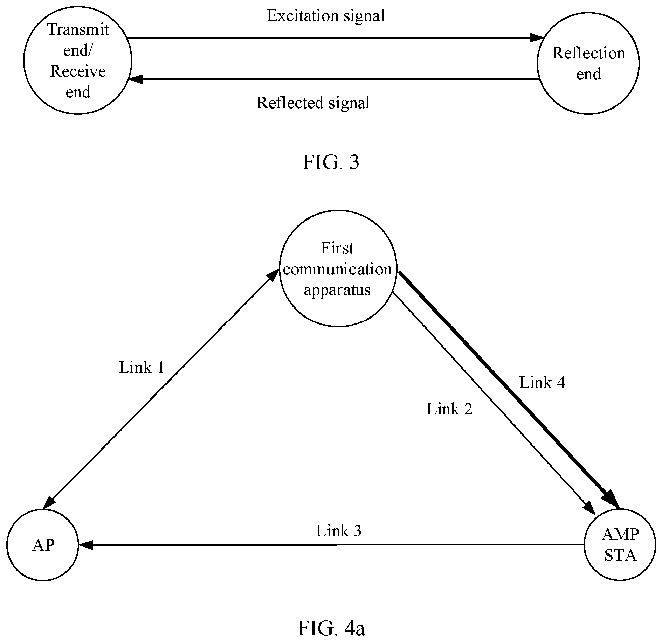

As another example, FIG. 3 is a diagram of another backscatter communication according to an embodiment of this application. As shown in FIG. 3, a transmit end in backscatter communication and a receive end in backscatter communication are a same device.

In this embodiment of this application, an excitation signal may also be referred to as a carrier signal, and a reflected signal may also be referred to as a backscatter communication signal. Names of the signals are not limited in this embodiment of this application. A specific format of the excitation signal is not limited in this embodiment of this application. For example, the excitation signal may be a common communication signal, a Wi-Fi signal, a radar signal, or the like. This is not limited in this embodiment of this application.

In this embodiment of this application, a frequency band (or referred to as a band) supported by a link used to transmit a reflected signal may be the same as a frequency band supported by a link used to transmit an excitation signal.

### 5. Excitation apparatus and relay apparatus

The excitation apparatus may be configured to send a WPT signal to an AMP STA. For example, the excitation apparatus may include an energizer (energizer). The excitation apparatus may also be referred to as an excitation node or the like. For example, a type A AMP STA may send a WPT signal to a type B AMP STA or a type C AMP STA. For another example, a type A AMP STA with sufficient electric energy may provide a WPT signal for a type A AMP STA with less electric energy. As the standard progresses, another device configured to provide RF energy for the AMP STA may appear subsequently. Therefore, a specific product form of the excitation apparatus is not limited in this embodiment of this application.

The relay apparatus may be configured to amplify a signal, compensate for signal attenuation, and support long-distance communication. The relay apparatus may include a relay. The relay apparatus may also be referred to as a relay node or the like. For specific descriptions of the relay apparatus, refer to a standard, a protocol, or the like. Details are not described herein.

In this embodiment of this application, signal coverage can be increased by deploying the relay apparatus. For example, the relay apparatus may support a new PPDU format and the like.

In an example, the excitation apparatus and the relay apparatus may be different physical entities (or referred to as physical nodes).

In another example, a communication apparatus may be configured to implement a function of the excitation apparatus, or may be configured to implement a function of the relay apparatus. For example, the communication apparatus not only has a function of sending a WPT signal to an AMP STA, but also may have a function of supporting communication. For example, the function implemented by the foregoing excitation apparatus and the function implemented by the foregoing relay apparatus may be implemented by a communication apparatus. For ease of description, the following uses a first communication apparatus as an example to describe a communication apparatus shown herein.

### 6. Power transfer indication information, excitation indication information, and communication indication information

(1) The power transfer indication information may be information for indicating an AMP STA to receive a WPT signal. For example, the power transfer indication information may be information that is indicated by an AP to the excitation apparatus (or the first communication apparatus) and that is about receiving the WPT signal by the AMP STA. The power transfer indication information may include at least one of an identifier of the AMP STA, wake-up information of the AMP STA, or trigger information. The identifier of the AMP STA may be used to identify the AMP STA. The wake-up information of the AMP STA may indicate to wake up the AMP STA, for example, may include wake-up time or a wake-up period. The trigger information may be used to activate the AMP STA.

For example, the power transfer indication information may further include at least one of the following: wake-up information of the excitation apparatus or indication information indicating whether to transfer power. The wake-up information of the excitation apparatus may indicate to wake up the excitation apparatus. For the wake-up information of the excitation apparatus, refer to the description of the wake-up information of the AMP STA. Details are not described herein again. The indication information indicating whether to transfer power may indicate that the excitation apparatus needs to transfer power to the AMP STA.

For example, the power transfer indication information may further include at least one of the following: transmission time of the WPT signal or waveform information of the WPT signal. The transmission time of the WPT signal may indicate time at which the excitation apparatus transmits the WPT signal. The time may be time at which the WPT signal starts to be transmitted, or transmission start time, time for continuous transmission, or the like of the WPT signal. The transmission start time may be absolute time, or may be time relative to wake-up time, or the like. A specific form of the time is not limited in this embodiment of this application. The waveform information of the WPT signal may indicate a waveform of the WPT signal or a modulation scheme of the WPT signal.

In an example, the excitation apparatus (or the first communication apparatus) may periodically send the WPT signal to the AMP STA. For example, the power transfer indication information may include an identifier of the AMP STA, wake-up information of the AMP STA, transmission time of the WPT signal, or waveform information of the WPT signal.

In another example, the excitation apparatus (the first communication apparatus) may send a WPT signal to the AMP STA as required. For example, the power transfer indication information may include an identifier of the AMP STA, trigger information, transmission time of the WPT signal, or waveform information of the WPT signal.

In still another example, with reference to the power status of the AMP STA, the power transfer indication information may include an identifier of the AMP STA, indication information indicating whether to transfer power, transmission time of the WPT signal, or waveform information of the WPT signal. Specific content of the power transfer indication information is not enumerated herein.

(2) The excitation indication information may be information for indicating the AMP STA to receive an excitation signal. For example, the excitation indication information may be information that is indicated by an AP to the excitation apparatus (or the first communication apparatus) and that is about receiving the excitation signal by the AMP STA. The excitation indication information may include at least one of an identifier of the AMP STA or wake-up information of the AMP STA. For example, the excitation indication information may further include at least one of the following: transmission time of the excitation signal, waveform information of the excitation signal, and wake-up information of the excitation apparatus. For description of the excitation indication information, refer to the description of the power transfer indication information. Details are not described herein again.

The power transfer indication information, the excitation indication information, and the communication indication information in this embodiment of this application are distinguished by using different functions. In specific implementation, the three pieces of information may be included in a same message, or may be included in different messages, or at least two pieces of information in the three pieces of information may be the same. A specific implementation of the three pieces of information is not limited in this embodiment of this application. For example, the excitation apparatus (or the first communication apparatus) may not only send the WPT signal to the AMP STA, but also send the excitation signal to the AMP STA. Therefore, in an example, the power transfer indication information may not only be information for indicating the AMP STA to receive the WPT signal, but also be information for indicating the AMP STA to receive the excitation signal. For example, the waveform information of the WPT signal may be the same as the waveform information of the excitation signal. For another example, the transmission time of the WPT signal is the same as the transmission time of the excitation signal. For another example, there may be a specific offset between the transmission time of the WPT signal and the transmission time of the excitation signal. For example, the transmission time of the excitation signal is later than that of the WPT signal. When different topology structures are involved in the following, an example in which the power transfer indication information may indicate both the information about the WPT signal and the information about the excitation signal is used for description. However, this should not be construed as a limitation on embodiments of this application.

(3) The communication indication information is information for indicating the AMP STA to perform communication. For example, the communication indication information may be information that is about communication performed by the AMP STA, that is sent by the AP to the relay apparatus (or the first communication apparatus), and that is indicated by the relay apparatus (or the first communication apparatus) to the AMP STA. The communication indication information may include at least one of the following: control information, scheduling information, and a data type that are to be reported by the AMP STA. The control information may include at least one of a PPDU-format waveform, MCS information, or frequency hopping information reported by the AMP STA. The scheduling information may indicate reporting time of the AMP STA or information about a used channel. The data type may indicate data usage or a data size reported by the AMP STA. It may be understood that, for the type C AMP STA, if the type C AMP STA wants to send a signal, the type C AMP STA needs to receive an excitation signal. Therefore, transmission time of the excitation signal may be associated with time of sending an uplink signal by the AMP STA. For example, the transmission time of the excitation signal may be associated with time of the control information, or may be associated with time of acknowledgment (acknowledgment, ACK) information fed back by the AMP STA.

Due to wide deployment and use of unlicensed frequency bands, a Wi-Fi internet of things network is highly competitive from a perspective of deployment costs. However, in the following cases, many use cases still cannot be resolved using an existing Wi-Fi IoT technology. First, in an extreme environment condition (such as high voltage, extremely high/low temperature, and damp environment), a conventional battery-powered device may not work properly. Second, many use cases require maintenance-free devices, for example, replacement of a conventional battery is unnecessary/impossible. Finally, some use cases require devices having ultra-low complexity, a very small device size (for example, thickness of several millimeters), a longer lifecycle, and the like. However, the AMP-based internet of things can implement battery-free communication and meet requirements of various vertical applications. Due to limitations of device capabilities, the AMP field may face the following two problems:
Problem 1: unbalanced uplink and downlink, or referred to as a problem of unbalanced uplink and downlink coverage. Generally, communication from the AP to the AMP STA is downlink, and vice versa. Because receiver sensitivity (or referred to as receive power sensitivity) of the AMP STA is relatively poor, a path loss that can be tolerated in downlink is relatively low, a downlink sensitivity difference (for example, a difference between transmit power of the AP and receive power of the AMP STA) is less than an uplink sensitivity difference (a difference between transmit power of the AMP STA and receive power of the AP), and downlink coverage is generally less than an uplink coverage. Consequently, the AMP STA may fail to receive information (or power) sent by the AP, resulting in low communication efficiency, or even a case in which the AMP STA cannot communicate with the AP. The receiver sensitivity of the AMP STA shown herein is relatively poor relative to the AP. For example, a threshold of the receive power of the AMP STA is higher than a threshold of the receive power of the AP.
Problem 2: Self-interference in full-duplex backscatter. As a communication manner with extremely low power consumption, backscatter communication is one of hot potential technologies in the AMP field. However, when a transmit end of backscatter communication is the same as a receive end of backscatter communication (as shown in FIG. 3), and a frequency band of an excitation signal is the same as a frequency band of a reflected signal, because energy of the reflected signal is very low, the reflected signal is submerged in the excitation signal, which increases additional difficulty in signal processing.

In view of this, embodiments of this application provide a communication method and apparatus, to resolve the foregoing problem 1 and/or problem 2. For specific descriptions of the AP, the AMP STA, the first communication apparatus, the excitation apparatus, or the relay apparatus in the following, refer to the foregoing description. Details are not described in the following again. The following describes in detail different topology structures and method processes.

### Topology structure 1

FIG. 4a is a diagram of a topology structure of a communication system according to an embodiment of this application. As shown in FIG. 4a, a link 1 (link 1) to a link 3 (link 3) may all be communication links, and a link 4 (link 4) may be a WPT link. The link 1 is a bidirectional link, the link 2 is a unidirectional communication link from a first communication apparatus to an AMP STA, and the link 3 is a unidirectional communication link from the AMP STA to an AP. The bidirectional link shown in embodiments of this application means that the link may be used for communication from a device A to a device B (that is, a direction from the device A to the device B), and may be used for communication between the device B and the device A (that is, a direction from the device B to the device A). A unidirectional link is applicable only to communication from the device A to the device B. "A" and "B" shown herein are used to distinguish between different devices.

In an example 1A, all the link 1 to the link 4 may support a frequency band of sub-1 GHz.

In another example 1B, all the link 1 to the link 3 may support a frequency band of 2.4 GHz, and the link 4 may support a frequency band of sub-1 GHz.

In still another example 1C, all the link 1 to the link 4 may support a frequency band of 2.4 GHz.

In still another example 1D, all the link 1 to the link 3 may support a frequency band of sub-1 GHz, and the link 4 may support a frequency band of 2.4 GHz.

Generally, a frequency band of a link used to transmit an excitation signal is the same as a frequency band of a link used to transmit a reflected signal. For example, when the link used to transmit the excitation signal is the link 4, the frequency band supported by the link 4 may be the same as the frequency band supported by the link 3. For another example, when the link used to transmit the excitation signal is the link 2, the frequency band supported by the link 2 is the same as the frequency band supported by the link 3. Frequency bands listed in this embodiment of this application are merely examples. For example, as the standard progresses, more frequency bands may be supported in the AMP field. In this case, a frequency band supported by a WPT link and a frequency band supported by a communication link may also be updated accordingly. Because the link 1 is a link between the AP and the first communication apparatus, the link 1 may further support more frequency bands, for example, 5 GHz or 6 GHz.

In this embodiment of this application, a same PPDU format or different PPDU formats may be used on the link 1 to the link 3. For example, different PPDU formats may be used on the link 1 and the link 2. This is not limited in this embodiment of this application. For example, when the frequency band supported by the link 1 is a frequency band of 2.4 GHz, a frequency band of 5 GHz, a frequency band of 6 GHz, or the like, a format of a PPDU transmitted on the link 1 may be a legacy (legacy) PPDU format (for example, a PPDU format that supports a Wi-Fi protocol), a newly defined PPDU format, or the like. This is not limited in this embodiment of this application. For example, when types of AMP STAs are different, formats of PPDUs used by the AMP STAs may be different (for example, formats of PPDUs received by the AMP STAs, or formats of PPDUs sent by the AMP STAs). For example, when a type of the AMP STA is a type A AMP STA, the AMP STA may support a PPDU format related to an existing Wi-Fi protocol or a subsequent Wi-Fi protocol. For another example, when the type of the AMP STA is a type C AMP STA, the AMP STA may support a simple PPDU format, for example, a PPDU modulated by using OOK. For another example, when the type of the AMP STA is a type C AMP STA, the AMP STA may support a new PPDU format (for example, an AMP PPDU format). The new PPDU format is not limited in this embodiment of this application. Related descriptions of the PPDU format herein are also applicable to the following, and details are not described below again.

In a possible implementation, when a frequency band supported by the communication link such as the link 2 is different from a frequency band supported by the WPT link such as the link 4 (for example, the example 1B and the example 1D), the first communication apparatus may send occupation indication information on the link 2, and the occupation indication information may indicate that the link 2 has been occupied. For example, when the first communication apparatus sends a WPT signal on the link 4, the first communication apparatus may send the occupation indication information on the link 2. The occupation indication information may be any signal, for example, a null data packet (null data packet, NDP). The first communication apparatus can effectively prevent, by sending the occupation indication information, a third-party device from preempting the link 2. The third-party device shown herein is relative to the first communication apparatus and the AMP STA. Related descriptions of the occupation indication information herein are also applicable to the following, and details are not described below again.

For the topology structure 1, the link 2 is a unidirectional communication link from the first communication apparatus to the AMP STA. When the first communication apparatus sends an excitation signal, a receive end of a reflected signal obtained after the excitation signal is reflected by the AMP STA is an AP, that is, a transmit end and a receive end of backscatter communication are not a same device. The foregoing topology structure 1 can effectively resolve the problem of backscatter self-interference, and can reduce difficulty of processing a signal by the AP, for example, reduce difficulty of processing a reflected signal by the AP.

For the topology structure 1, the link 3 is a unidirectional communication link from the AMP STA to the AP. Because receiver sensitivity of the AP is better than that of the AMP STA, information sent by the AMP STA can be received by the AP. In the topology structure 1, the AMP STA may receive, by using the first communication apparatus, information sent by the AP, and coverage can be increased by using the first communication apparatus. Therefore, the foregoing topology structure 1 can effectively resolve a problem of unbalanced uplink and downlink (or effectively resolve a problem of unbalanced uplink and downlink coverage).

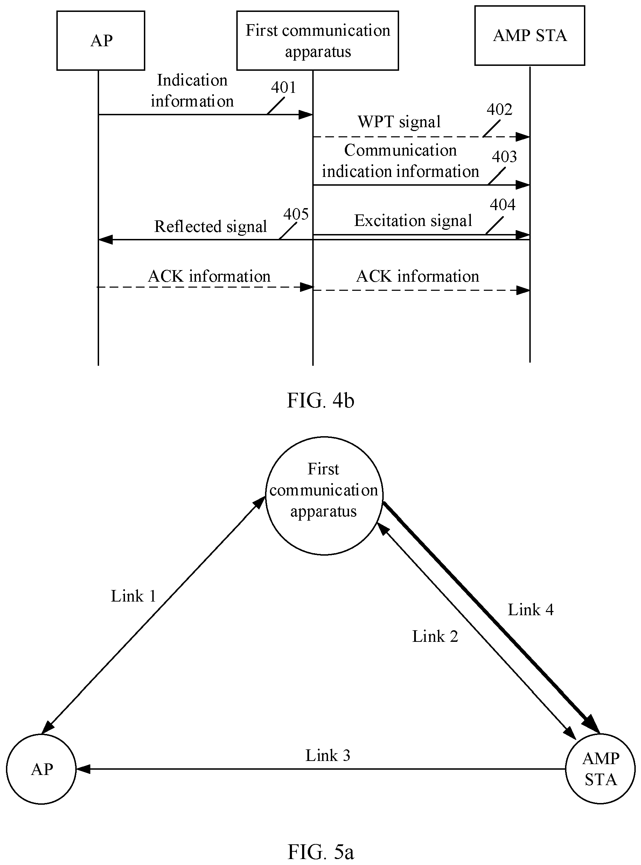

FIG. 4b is a schematic flowchart of a communication method according to an embodiment of this application. The communication method may be applied to the topology structure shown in FIG. 4a. As shown in FIG. 4b, the method includes the following steps.

401: An AP sends indication information to a first communication apparatus, and correspondingly, the first communication apparatus receives the indication information.

For example, the AP may send the indication information with reference to information such as a device type of an AMP STA, a power status of the AMP STA, and a channel occupation status. For descriptions of the device type and the power status, refer to the description of the term 1. Details are not described herein again. For example, the AP may send the indication information by using a link 1.

The first communication apparatus can implement both a function implemented by an excitation apparatus and a function implemented by a relay apparatus. Therefore, the AP may indicate power transfer indication information about the AMP STA to the first communication apparatus, and may indicate communication indication information about the AMP STA to the first communication apparatus. For example, the indication information may include power transfer indication information and communication indication information. For related descriptions of the two pieces of information, refer to descriptions of the foregoing terms. Details are not described herein again.

A PPDU format used when the AP communicates with the first communication apparatus may be a PPDU format related to a Wi-Fi protocol, a newly defined PPDU format, or the like. This is not limited in this embodiment of this application. In an example, the indication information may be included in a control frame or a management frame. For example, the indication information may be included in a control frame or a management frame in a current Wi-Fi protocol, for example, a beacon (beacon) frame. Certainly, the indication information may alternatively be included in a new control frame, a new management frame, or the like applicable to the AMP field. This is not limited in this embodiment of this application. In another example, the indication information may be included in a data frame.

For example, the first communication apparatus may further send ACK information for the indication information to the AP. For descriptions of the ACK information, refer to the following. Details are not described herein.

402: The first communication apparatus sends a WPT signal to an AMP STA, and correspondingly, the AMP STA may receive the WPT signal.

For example, the first communication apparatus may send the WPT signal to the AMP STA by using a link 4 based on the indication information. For example, a receive end may be identified with reference to an identifier of the AMP STA. For another example, when to wake up the AMP STA may be determined with reference to wake-up information of the AMP STA. For another example, when to transmit the WPT signal (or an excitation signal) may be determined with reference to transmission time of the WPT signal. For another example, the WPT signal (or the excitation signal) may be sent with reference to waveform information of the WPT signal, which is not enumerated herein.

In an example, when the AMP STA is a type C AMP STA, because power transfer of the type C AMP STA is coupled to data transmission, before performing communication, the type C AMP STA needs to first obtain a WPT signal to store energy. Therefore, before steps such as step 403 and step 404, the AMP STA needs to first receive a WPT signal to ensure that the AMP STA can have sufficient energy to perform a subsequent operation.

In another example, when the AMP STA is a type A AMP STA or a type B AMP STA, step 402 may be optional relative to step 403 and step 404. For example, the WPT signal may be sent with reference to power statuses of the type A AMP STA and the type B AMP STA. For a description of the power status, refer to the description of capability interaction in the foregoing term 1. For example, the first communication apparatus may obtain the power status of the AMP STA, and send the WPT signal with reference to the power status.

A sequence between step 402 and other steps is not limited.

403: The first communication apparatus sends communication indication information to the AMP STA, and correspondingly, the AMP STA receives the communication indication information.

For example, the first communication apparatus may send the communication indication information based on indication information. For example, the communication indication information is obtained from the indication information, and then the communication indication information is sent. The first communication apparatus may send the communication indication information by using the link 2.

In an example, the communication indication information may be included in a control frame or a management frame. In another example, the communication indication information may be included in a data frame. For related descriptions of the communication indication information, refer to the description of the indication information in step 401. Details are not described herein again.

In an example, when the AMP STA is a type C AMP STA (or a type B AMP STA), the communication indication information may be carried in an AMP PPDU. A format of the AMP PPDU may be different from a format of an existing PPDU (referred to as a Wi-Fi PPDU subsequently) in a Wi-Fi protocol. The AMP PPDU shown in this embodiment of this application may be understood as a PPDU whose format is different from a format of the existing PPDU in the Wi-Fi protocol and that is applicable to the AMP field. In another example, when the AMP STA is a type A AMP STA, the communication indication information may be carried in a Wi-Fi PPDU, or the communication indication information may be carried in an AMP PPDU, or the like. This is not limited in this embodiment of this application.

In an example, the WPT signal and the communication indication information may be carried in different PPDUs. In another example, the WPT signal and the communication indication information may alternatively be carried in a same PPDU. For example, a part of the PPDU is used to provide RF energy for the AMP STA, and the other part may be the communication indication information. Alternatively, the WPT signal, the communication indication information, and the excitation signal are carried in a same PPDU. For example, a first part in the PPDU is used to provide RF energy for the AMP STA, a second part may be the communication indication information, and a third part is the excitation signal. A PPDU format of each signal is not limited in this embodiment of this application.

404: The first communication apparatus sends an excitation signal to the AMP STA, and correspondingly, the AMP STA receives the excitation signal.

405: The AMP STA sends a reflected signal to the AP, and correspondingly, the AP receives the reflected signal.

In this embodiment of this application, the reflected signal may be carried in an AMP PPDU. Certainly, for the type A AMP STA or the type B AMP STA, the reflected signal may alternatively be carried in a Wi-Fi PPDU. For example, the excitation signal and the reflected signal may be respectively carried in different PPDUs in a same format. Specific forms of the excitation signal and the reflected signal are not limited in this embodiment of this application. Generally, transmission time of the excitation signal is relatively close to transmission time of the reflected signal. For example, it may be considered that the excitation signal and the reflected signal are simultaneously transmitted. An interval between step 404 and step 405 in FIG. 4b is merely an example, and should not be construed as a limitation on this embodiment of this application. Similarly, an interval between the excitation signal and the reflected signal shown below is merely an example, and should not be construed as a limitation on this embodiment of this application. The excitation signal may have specific duration. FIG. 4b shows an example of an excitation signal by using an arrow, but the excitation signal should not be understood as a limitation on this embodiment of this application. The description of the excitation signal and the reflected signal is also applicable below.

For example, the reflected signal may be used to carry control information, a power transfer status, or the like. The power transfer status may indicate a status of electric energy stored by the AMP STA, and the like. Specific information carried in the reflected signal is not limited in this embodiment of this application.

In a possible implementation, the AP may send acknowledgment (acknowledgment, ACK) information to the first communication apparatus, and the first communication apparatus may send the ACK information to the AMP STA. For example, the ACK information may be used to acknowledge that the AP has received the reflected signal. For another example, the ACK information may indicate that the ACK information is acknowledgment information for the reflected signal.

In another possible implementation, after the AMP STA sends the reflected signal, it may be considered by default that the AP has received the reflected signal. As shown in FIG. 4b, the ACK information may be an optional step.

In this embodiment of this application, the link 2 is a unidirectional communication link from the first communication apparatus to the AMP STA. When the first communication apparatus sends an excitation signal, a receive end of a reflected signal obtained after the excitation signal is reflected by the AMP STA is an AP, that is, a transmit end and a receive end of backscatter communication are not a same device. Therefore, the backscatter self-interference problem can be effectively resolved by using the communication system shown in the topology structure 1. In addition, the AMP STA may receive information from the AP by using the first communication apparatus. Therefore, a problem of unbalanced uplink and downlink can be further resolved, communication efficiency is effectively improved, and system performance is improved.

### Topology structure 2

FIG. 5a is a diagram of a topology structure of a communication system according to an embodiment of this application. As shown in FIG. 5a, a link 1 (link 1) to a link 3 (link 3) may all be communication links, and a link 4 (link 4) may be a WPT link. The link 1 is a bidirectional link, the link 2 is a bidirectional link, and the link 3 is a unidirectional communication link from an AMP STA to an AP. For example, the AMP STA may feed back a power transfer status by using the link 2.

For related descriptions of a frequency band supported by each link, refer to the foregoing example 1A to example 1D. Details are not described herein again.

For related descriptions of a PPDU format, refer to the descriptions in the foregoing topology structure 1. Details are not described herein again.

For related descriptions of occupation indication information, refer to the descriptions in the foregoing topology structure 1. Details are not described herein again.

For the topology structure 2, the link 3 is a unidirectional communication link from the AMP STA to the AP. Because receiver sensitivity of the AP is better than that of the AMP STA, information sent by the AMP STA can be received by the AP. In addition, the AMP STA may receive information from the AP by using the first communication apparatus. Therefore, a problem of unbalanced uplink and downlink can be effectively resolved by using the foregoing topology structure 2, and communication efficiency is improved.

FIG. 5b is a schematic flowchart of a communication method according to an embodiment of this application. The communication method may be applied to the topology structure shown in FIG. 5a. For related descriptions of FIG. 5b, refer to FIG. 4b. Details are not described herein again.

A difference between FIG. 5b and FIG. 4b lies in whether the AMP STA can send ACK information to the first communication apparatus. The link 2 in FIG. 4a is a unidirectional link, and therefore the AMP STA cannot feed back ACK information. The link in FIG. 5a is a bidirectional link, and therefore the AMP STA can feed back ACK information. The ACK information may be described as follows:
In a possible implementation, the AMP STA may feed back ACK information to the first communication apparatus. Correspondingly, the first communication apparatus may receive the ACK information.

The ACK information may be used to acknowledge that the AMP STA has correctly received communication indication information, or may be used to acknowledge that the AMP STA has received communication indication information. For example, the ACK information may indicate that the ACK information is acknowledgment information for the communication indication information. For another example, the AMP STA may determine, based on the ACK information, that the AMP STA needs the first communication apparatus to send an excitation signal. In other words, the ACK information shown in this embodiment of this application may indicate that the ACK information is acknowledgment information for which information. Because the ACK information is optional, the ACK information is represented in a dashed line manner in FIG. 5b. As shown in FIG. 5b, the ACK information may be carried in a reflected signal.

For example, for a type C AMP STA, because the type C AMP STA has low power consumption and a low processing capability, the AMP STA may not send the ACK information. For example, for a type A AMP STA or a type B AMP STA, the ACK information may be carried in an AMP PPDU or a Wi-Fi PPDU.

In another possible implementation, after sending the communication indication information, the first communication apparatus may consider by default that the AMP STA has received the communication indication information. In other words, after receiving the communication indication information, the AMP STA may not send the ACK information.

For descriptions of other terms in FIG. 5b, refer to FIG. 4b. Details are not described herein again.

For the topology structure shown in FIG. 5a, although the link 2 is a bidirectional link, a receive end of the reflected signal sent by the AMP STA may not only include the AP, but also include the first communication apparatus, for example, a receive end of some signals sent by the AMP STA may alternatively include the first communication apparatus. When the AMP STA sends the reflected signal to the AP, the first communication apparatus may not receive the signal, and therefore the WPT signal is not affected.

In this embodiment of this application, the AMP STA may receive information from the AP by using the first communication apparatus. Therefore, by using the communication system shown in the topology structure 2, a problem of unbalanced uplink and downlink can be effectively resolved, and communication efficiency is effectively improved.

### Topology structure 3

FIG. 6a is a diagram of a topology structure of a communication system according to an embodiment of this application. As shown in FIG. 6a, a link 1 (link 1) to a link 3 (link 3) may all be communication links, and a link 4 (link 4) may be a WPT link. The link 1 is a bidirectional link, the link 2 is a unidirectional link, and the link 3 is a bidirectional link.

For related descriptions of a frequency band supported by each link, refer to the foregoing example 1A to example 1D. Details are not described herein again.

For related descriptions of a PPDU format, refer to the descriptions in the foregoing topology structure 1. Details are not described herein again.

For related descriptions of occupation indication information, refer to the descriptions in the foregoing topology structure 1. Details are not described herein again.

In this embodiment of this application, a problem of unbalanced uplink and downlink can be resolved by adjusting an MCS. For example, different transmission rates may be used for uplink and downlink. For example, a relatively high transmission rate may be used in uplink, and a relatively low transmission rate may be used in downlink. The problem of unbalanced uplink and downlink is resolved through a rate difference. "Relatively high" and "relatively low" shown herein are relative terms.

For the topology structure 3, the link 2 is a unidirectional communication link from the first communication apparatus to the AMP STA. When the first communication apparatus sends an excitation signal, a receive end of a reflected signal obtained after the excitation signal is reflected by the AMP STA is an AP, that is, a transmit end and a receive end of backscatter communication are not a same device. Therefore, the foregoing topology structure 3 can effectively resolve a problem of backscatter self-interference, and can reduce difficulty of processing a signal by the AP. For related descriptions of the link 2 and backscatter interference, refer to the description in the foregoing topology structure 1. Details are not described herein again.

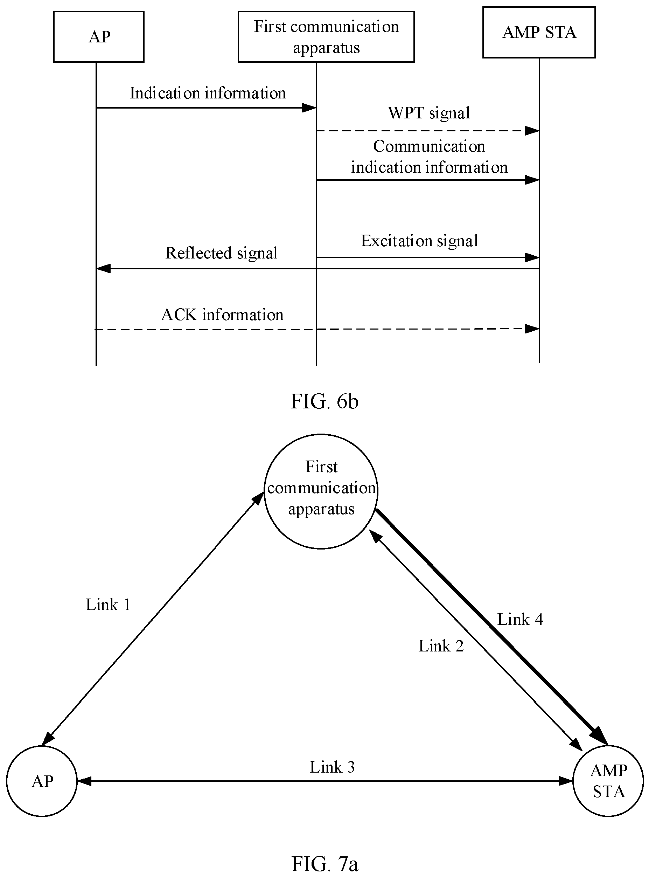

FIG. 6b is a schematic flowchart of a communication method according to an embodiment of this application. The communication method may be applied to the topology structure shown in FIG. 6a. For related descriptions of FIG. 6b, refer to FIG. 4b or FIG. 5b. Details are not described herein again.

For the topology structure shown in FIG. 6a, because the link 3 is a bidirectional link, when the AP feeds back ACK information, the ACK information may be transmitted on the link 3. That is, the ACK information may be directly sent by the AP to the AMP STA.

In this embodiment of this application, a problem of backscatter self-interference can be effectively resolved by using the communication system shown in the topology structure 3, and complexity and difficulty of processing a signal by the AP are effectively reduced.

### Topology structure 4

FIG. 7a is a diagram of a topology structure of a communication system according to an embodiment of this application. As shown in FIG. 7a, a link 1 (link 1) to a link 3 (link 3) may all be communication links, and a link 4 (link 4) may be a WPT link. The link 1 to the link 3 are all bidirectional links.

For related descriptions of a frequency band supported by each link, refer to the foregoing example 1A to example 1D. Details are not described herein again.

For related descriptions of a PPDU format, refer to the descriptions in the foregoing topology structure 1. Details are not described herein again.

For related descriptions of occupation indication information, refer to the descriptions in the foregoing topology structure 1. Details are not described herein again.

In this embodiment of this application, a problem of unbalanced uplink and downlink can be resolved by adjusting an MCS. For example, different transmission rates may be used for uplink and downlink. For related descriptions of the transmission rate, refer to the description in the topology structure 3. Details are not described herein again.

FIG. 7b is a schematic flowchart of a communication method according to an embodiment of this application. The communication method may be applied to the topology structure shown in FIG. 7a. For related descriptions of FIG. 7b, refer to FIG. 4b, FIG. 5b, or FIG. 6b. Details are not described herein again.

It may be understood that FIG. 4b, FIG. 5b, FIG. 6b, and FIG. 7b do not show another interaction procedure between the AP and the first communication apparatus. In specific implementation, the AP and the first communication apparatus may also transmit other information different from the indication information. Details are not listed one by one herein.

FIG. 8 is a diagram of a topology structure of a communication system according to an embodiment of this application. Directions of the link 2 and the link 3 are not shown in the topology structure shown in FIG. 8. For the directions of the link 2 and the link 3, refer to the descriptions of the topology structure 1 to the topology structure 4, or refer to the unidirectional or bidirectional descriptions shown in Table 1. It may be understood that Table 1 shows examples of some topology structures, but does not summarize all configurations of the foregoing topology structure 1 to topology structure 4.

Table 1 shows, for example, at which physical layer (physical layer, PHY) signals on respective links are generated. AMP PHY in Table 1 may be understood as that a signal applicable to the AMP field may be transmitted on a corresponding link, and the signal may be generated by PHY applicable to the AMP field. WPT shown in Table 1 indicates that a WPT signal is transmitted on a corresponding link. For example, for related descriptions of a configuration 1 to a configuration 4 in Table 1, refer to the topology structure 1, and for related descriptions of a configuration 5 and a configuration 6, refer to the topology structure 2. Configurations shown in Table 1 are merely examples, and should not be construed as a limitation on embodiments of this application.

**Table 1**

| Configuration | Description | | |
|---|---|---|---|
| 1 | Link (link) | Frequency band (GHz) | Description |
| | 1 | Sub-1 | AMP PHY |
| | 2 | Sub-1 | AMP PHY, unidirectional, having only a direction from the first communication apparatus to the AMP STA |
| | 3 | Sub-1 | AMP PHY, unidirectional, having only a direction from the AMP STA to the AP |
| | 4 | Sub-1 | WPT |
| 2 | Link | Frequency band (GHz) | Description |
| | 1 | 2.4 | AMP PHY |
| | 2 | 2.4 | AMP PHY, unidirectional, having only a direction from the first communication apparatus to the AMP STA |
| | 3 | 2.4 | AMP PHY, unidirectional, having only a direction from the AMP STA to the AP |
| | 4 | Sub-1 | WPT |
| 3 | Link | Frequency band (GHz) | Description |
| | 1 | 2.4 | AMP PHY |
| | 2 | 2.4 | AMP PHY, unidirectional, having only a direction from the first communication apparatus to the AMP STA |
| | 3 | 2.4 | AMP PHY, unidirectional, having only a direction from the AMP STA to the AP |
| | 4 | 2.4 | WPT |
| 4 | Link | Frequency band (GHz) | Description |
| | 1 | Sub-1 | AMP PHY |
| | 2 | Sub-1 | AMP PHY, unidirectional, having only a direction from the first communication apparatus to the AMP STA |
| | 3 | Sub-1 | AMP PHY, unidirectional, having only a direction from the AMP STA to the AP |
| | 4 | 2.4 | WPT |
| 5 | Link | Frequency band (GHz) | Description |
| | 1 | Sub-1 | AMP PHY |
| | 2 | Sub-1 | AMP PHY, bidirectional |
| | 3 | Sub-1 | AMP PHY, unidirectional, having only a direction from the AMP STA to the AP |
| | 4 | 2.4 | WPT |
| 6 | Link | Frequency band (GHz) | Description |
| | 1 | 2.4 | AMP PHY |
| | 2 | 2.4 | AMP PHY, bidirectional |
| | 3 | 2.4 | AMP PHY, unidirectional, having only a direction from the AMP STA to the AP |
| | 4 | Sub-1 | WPT |

For other descriptions of Table 1, refer to the descriptions in the foregoing topology structure 1 to topology structure 4. Details are not described herein again. Differences between the communication methods shown in the foregoing topology structure 1 to topology structure 4 or working principles of different links may also be applicable to differences between other topology structures or working principles of links shown below.

### Topology structure 5

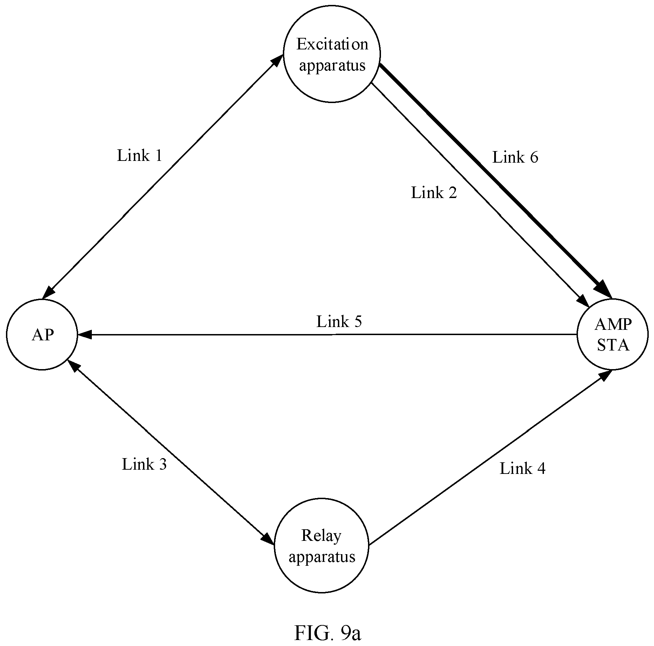

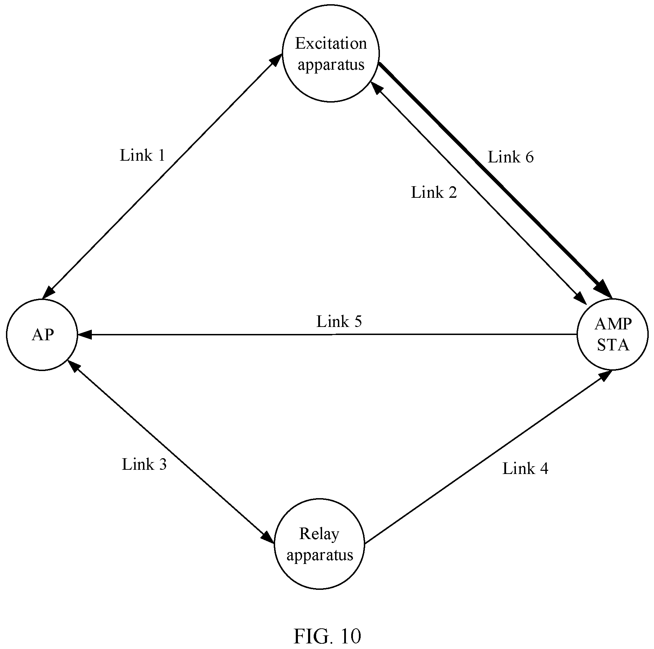

FIG. 9a is a diagram of a topology structure of a communication system according to an embodiment of this application. As shown in FIG. 9a, a link 1 (link 1) to a link 5 (link 5) may all be communication links, and a link 6 (link 6) may be a WPT link. Both the link 1 and the link 3 are bidirectional links, the link 2 is a unidirectional communication link from an excitation apparatus to an AMP STA, the link 4 is a unidirectional communication link from the AMP STA to a relay apparatus, and the link 5 is a unidirectional communication link from the AMP STA to an AP. For example, the link 5 may be an optional link. The description of the link 5 is also applicable to FIG. 10, FIG. 11a, FIG. 12, and FIG. 13 below.

In an example 9A, all the link 1 to the link 6 may support a frequency band of sub-1 GHz.

In another example 9B, all the link 1 to the link 5 may support a frequency band of sub-1 GHz, and the link 6 may support a frequency band of 2.4 GHz.

In still another example 9C, all the link 1 to the link 6 may support a frequency band of 2.4 GHz.

In still another example 9D, all the link 1 to the link 5 may support a frequency band of 2.4 GHz, and the link 6 may support a frequency band of sub-1 GHz.

For other descriptions of the frequency band, refer to the foregoing example 1A to example 1D. Details are not described herein again.

For related descriptions of a PPDU format, refer to the descriptions in the foregoing topology structure 1. Details are not described herein again.

For related descriptions of occupation indication information, refer to the descriptions in the foregoing topology structure 1. Details are not described herein again.

For the topology structure 5, because the link 2 is a unidirectional communication link from the excitation apparatus to the AMP STA, when the excitation apparatus sends an excitation signal, a receive end of a transmitted signal obtained after the excitation signal is reflected by the AMP STA may be the relay apparatus, that is, a transmit end and a receive end of backscatter communication are not a same device. Therefore, the foregoing topology structure 5 can effectively resolve a problem of backscatter self-interference, and can reduce difficulty of processing a signal by the AP.

For the topology structure 5, the AMP STA may receive a signal by using the relay apparatus. Based on a function that the relay apparatus supports long-distance communication, the AMP STA may receive information from the AP by using the relay apparatus, and therefore, coverage can be increased by using the relay apparatus. Therefore, the foregoing topology structure 5 can effectively resolve a problem of unbalanced uplink and downlink.

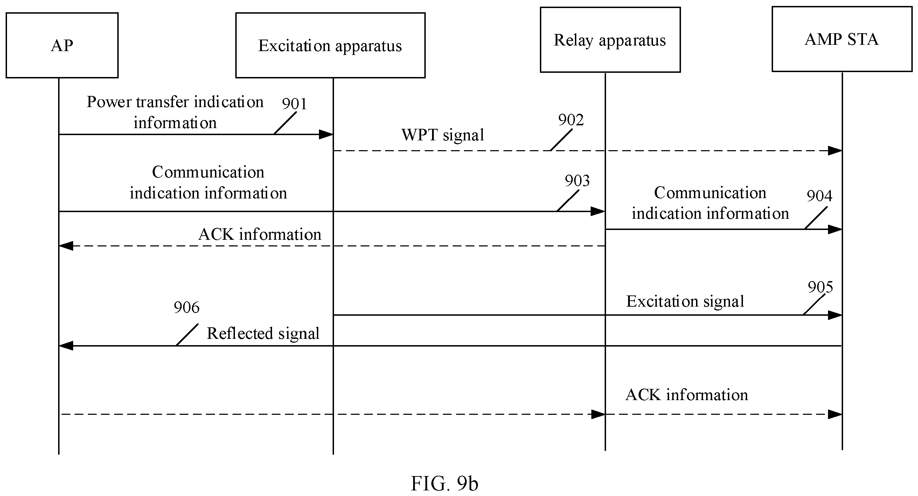

FIG. 9b is a schematic flowchart of a communication method according to an embodiment of this application. The communication method may be applied to the topology structure shown in FIG. 9a. As shown in FIG. 9b, the method includes the following steps.

901: An AP sends power transfer indication information to an excitation apparatus, and correspondingly, the excitation apparatus receives the indication information.

For example, the AP may transmit the power transfer indication information by using a link 1.

In an example, the power transfer indication information may be included in a control frame or a management frame. In another example, the power transfer indication information may be included in a data frame. For related descriptions of the power transfer indication information, refer to the descriptions of the indication information in FIG. 4b. Details are not described herein again.

In addition to the power transfer indication information, the AP and the excitation apparatus may further exchange other information. This is not limited in this embodiment of this application.

902: The excitation apparatus sends a WPT signal to an AMP STA, and correspondingly, the AMP STA may receive the WPT signal.

For a related description of step 902, refer to the description of step 402 in FIG. 4b. Details are not described herein again.

903: The AP sends communication indication information to a relay apparatus, and correspondingly, the relay apparatus receives the communication indication information.

For example, the AP may send the communication indication information by using a link 3. In an example, the communication indication information may be included in a control frame or a management frame. In another example, the communication indication information may be included in a data frame. For related descriptions of the communication indication information, refer to the description of the indication information in step 401 or the description of the PPDU format in step 403. Details are not described herein again. In addition to the communication indication information, the AP and the relay apparatus may further exchange other information. This is not limited in this embodiment of this application.

In a possible implementation, the relay apparatus may send ACK information to the AP. For related descriptions of the ACK information, refer to descriptions of FIG. 4b, FIG. 5b, or the like. Details are not described herein again. In another possible implementation, the relay apparatus may not send the ACK information. For example, the AP considers by default that the relay apparatus has received the communication indication information.

904: The relay apparatus sends the communication indication information to the AMP STA, and correspondingly, the AMP STA receives the communication indication information.

In an example, after parsing the communication indication information, the relay apparatus may generate new communication indication information again. The new communication indication information and the relay indication information received by the relay apparatus may be carried in different PPDU formats, or may be carried in a same PPDU format. For example, the communication indication information received by the relay apparatus may be carried in a Wi-Fi PPDU, and the communication indication information sent by the relay apparatus to the AMP STA may be carried in an AMP PPDU. In another example, the relay apparatus may transparently transmit the communication indication information. For example, the communication indication information may be carried in an AMP PPDU.

905: The excitation apparatus sends an excitation signal to the AMP STA, and correspondingly, the AMP STA receives the excitation signal.

906: The AMP STA sends a reflected signal to the AP, and correspondingly, the AP receives the reflected signal.

In a possible implementation, the AMP STA may feed back ACK information to the AP. Correspondingly, the AP may receive the ACK information. For example, the ACK information may be carried in a reflected signal. The ACK information may be an acknowledgment for the communication indication information, or the like. For related descriptions of the ACK information, refer to descriptions of FIG. 4b, FIG. 5b, or the like. Details are not described herein again. In another possible implementation, after sending the communication indication information, the relay apparatus may consider by default that the AMP STA has received the communication indication information. In other words, after receiving the communication indication information, the AMP STA may not send the ACK information.

Certainly, in addition to the ACK information, the reflected signal may further carry other information, such as control information or a power transfer status.

In a possible implementation, after the AP receives other information from the AMP STA, the AP may send ACK information to the AMP STA by using the relay apparatus. In another possible implementation, after the AMP STA sends the reflected signal that carries other information, it may be considered by default that the AP has received the reflected signal. For related descriptions of the ACK information, refer to descriptions of FIG. 4b, FIG. 5b, or the like.

In this embodiment of this application, by using the communication system shown in the topology structure 5, a problem of backscatter self-interference and a problem of unbalanced uplink and downlink can be effectively resolved, thereby effectively improving communication efficiency and system performance.

### Topology structure 6

FIG. 10 is a diagram of a topology structure of a communication system according to an embodiment of this application. As shown in FIG. 10, a link 1 (link 1) to a link 5 (link 5) may all be communication links, and a link 6 (link 6) may be a WPT link. The link 1, the link 2, and the link 3 are all bidirectional links, the link 4 is a unidirectional communication link from an AMP STA to a relay apparatus, and the link 5 is a unidirectional communication link from the AMP STA to an AP.

For related descriptions of the frequency band, refer to the foregoing example 9A to example 9D. Details are not described herein again.

For related descriptions of a PPDU format, refer to the descriptions in the foregoing topology structure 1. Details are not described herein again.

For related descriptions of occupation indication information, refer to the descriptions in the foregoing topology structure 1. Details are not described herein again.

For descriptions of the communication method in the topology structure 6, refer to FIG. 9b, FIG. 4b, FIG. 5b, or the like. Details are not shown herein again.

For the topology structure 6, the AMP STA may receive information from the AP by using the relay apparatus, so that coverage can be increased by using the relay apparatus, and a problem of unbalanced uplink and downlink can be effectively resolved by using the topology structure 6.

### Topology structure 7

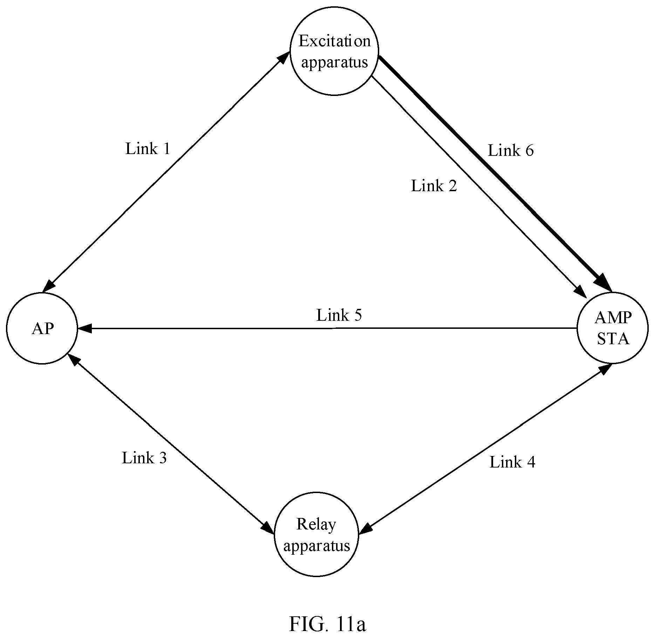

FIG. 11a is a diagram of a topology structure of a communication system according to an embodiment of this application. As shown in FIG. 11a, a link 1 (link 1) to a link 5 (link 5) may all be communication links, and a link 6 (link 6) may be a WPT link. The link 1, the link 3, and the link 4 are all bidirectional links, the link 2 is a unidirectional communication link from an excitation apparatus to an AMP STA, and the link 5 is a unidirectional communication link from the AMP STA to an AP.

For related descriptions of the frequency band, refer to the foregoing example 9A to example 9D. Details are not described herein again.

For related descriptions of a PPDU format, refer to the descriptions in the foregoing topology structure 1. Details are not described herein again.

For related descriptions of occupation indication information, refer to the descriptions in the foregoing topology structure 1. Details are not described herein again.

For the topology structure 7, because the link 2 is a unidirectional communication link from the excitation apparatus to the AMP STA, a transmit end of an excitation signal and a receive end of a reflected signal are not a same device. Therefore, the foregoing topology structure 7 can effectively resolve a problem of backscatter self-interference, and can reduce difficulty of processing a signal by the AP.

For the topology structure 7, the AMP STA may receive information from the AP by using the relay apparatus, and information sent by the AMP STA based on a function of supporting long-distance communication by the relay apparatus may also be received by the AP (or the AMP STA may send information to the AP by using the link 5), and coverage is increased by using the relay apparatus. Therefore, the foregoing topology structure 7 can effectively resolve a problem of unbalanced uplink and downlink.

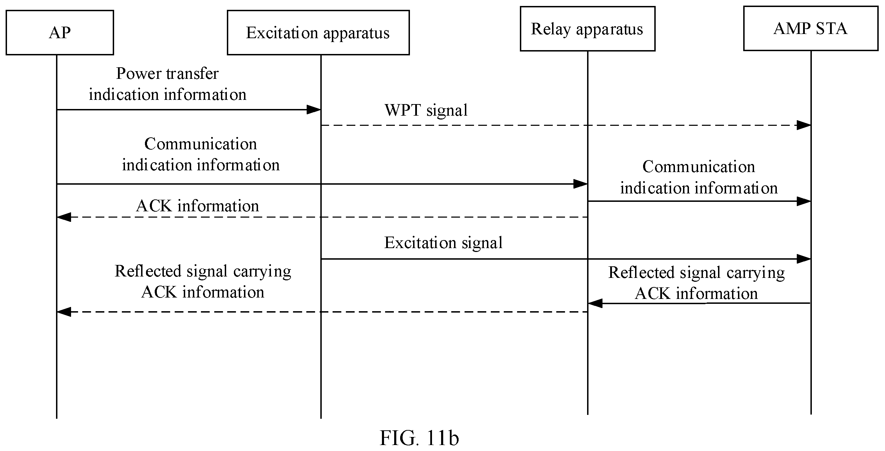

FIG. 11b is a schematic flowchart of a communication method according to an embodiment of this application. The communication method may be applied to the topology structure shown in FIG. 11a. For descriptions of the communication method in the topology structure 7, refer to FIG. 9b, FIG. 4b, FIG. 5b, or the like. Details are not shown herein again. A difference between FIG. 11b and FIG. 9b lies in that, the link 4 in FIG. 9b is a unidirectional communication link, and therefore the receive end of the reflected signal sent by the AMP STA is not the relay apparatus; and the link 4 in FIG. 11b is a bidirectional communication link, and therefore the receive end of the reflected signal sent by the AMP STA may be the relay apparatus, for example, the reflected signal may carry ACK information. Optionally, the relay apparatus may further send the reflected signal to the AP. In an example, the AMP STA may send, to the relay apparatus by using the link 4, a reflected signal that carries other information, where the other information may include control information, a power transfer status, or the like. In this case, the relay apparatus may further send ACK information for the other information by using the link 4. In another example, the AMP STA may send, to the AP by using the link 5, a reflected signal that carries other information. In this case, the AP may feed back ACK information by using the relay apparatus.

For other descriptions of FIG. 11b, refer to FIG. 9b and the like. Details are not described herein again.

### Topology structure 8

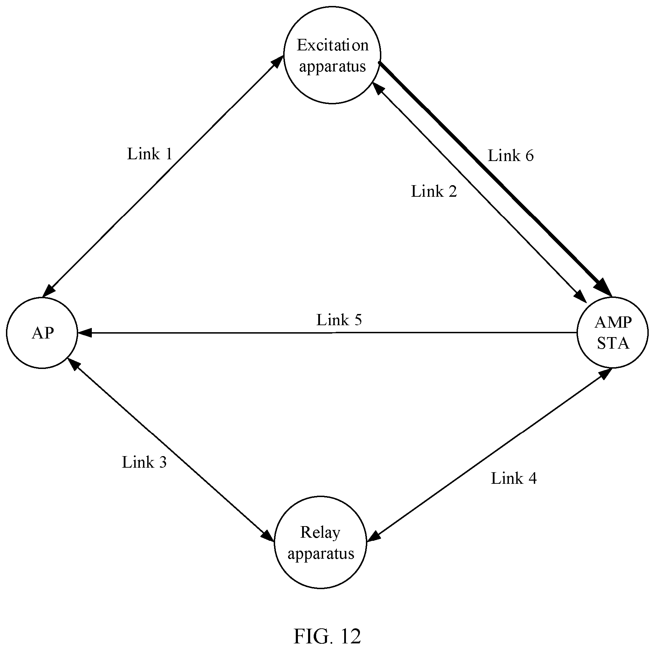

FIG. 12 is a diagram of a topology structure of a communication system according to an embodiment of this application. As shown in FIG. 12, a link 1 (link 1) to a link 5 (link 5) may all be communication links, and a link 6 (link 6) may be a WPT link. The link 1 to the link 4 are all bidirectional links, and the link 5 is a unidirectional communication link from an AMP STA to an AP.

For related descriptions of the frequency band, refer to the foregoing example 9A to example 9D. Details are not described herein again.

For related descriptions of a PPDU format, refer to the descriptions in the foregoing topology structure 1. Details are not described herein again.

For related descriptions of occupation indication information, refer to the descriptions in the foregoing topology structure 1. Details are not described herein again.

For descriptions of the communication method in the topology structure 8, refer to FIG. 11b, FIG. 9b, FIG. 4b, FIG. 5b, or the like. Details are not shown herein again.

For the topology structure 8, the AMP STA may receive, by using the relay apparatus, a signal sent by the AP, and coverage can be increased by using the relay apparatus. Therefore, the foregoing topology structure 8 can effectively resolve a problem of unbalanced uplink and downlink.

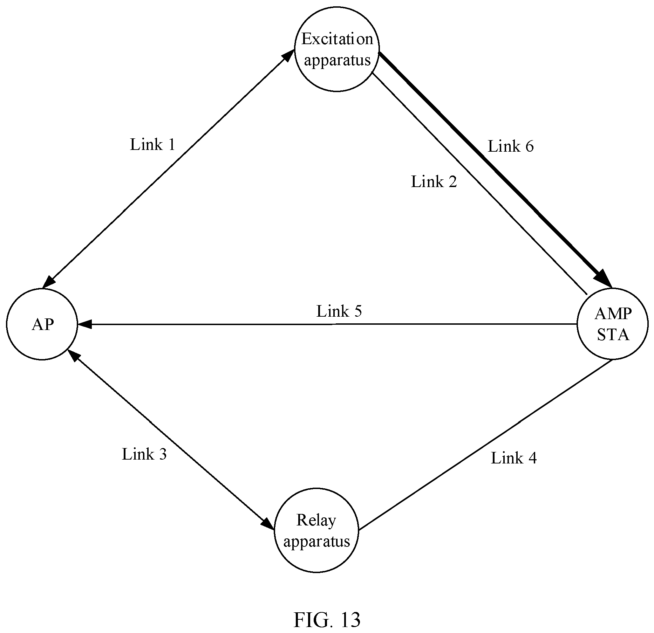

FIG. 13 is a diagram of a topology structure of a communication system according to an embodiment of this application. Directions of the link 2 and the link 4 are not shown in the topology structure shown in FIG. 13. For the directions of the link 2 and the link 4, refer to the descriptions of the topology structure 5 to the topology structure 8, or refer to the unidirectional or bidirectional descriptions shown in Table 2. It may be understood that Table 2 shows examples of some topology structures. For related descriptions of AMP PHY, refer to Table 1. Details are not described herein again.

**Table 2**

| Configuration | Description | | |
|---|---|---|---|
| 1 | Link | Frequency band (GHz) | Description |
| | 1 | Sub-1 | AMP PHY |
| | 2 | Sub-1 | AMP PHY, unidirectional, having only a direction from the excitation apparatus to the AMP STA |
| | 3 | Sub-1 | AMP PHY |
| | 4 | Sub-1 | AMP PHY, unidirectional, having only a direction from the relay apparatus to the AMP STA |
| | 5 | Sub-1 | AMP PHY, unidirectional, having only a direction from the AMP STA to the AP |
| | 6 | Sub-1 | WPT |
| 2 | Link | Frequency band (GHz) | Description |
| | 1 | Sub-1 | AMP PHY |
| | 2 | Sub-1 | AMP PHY, unidirectional, having only a direction from the excitation apparatus to the AMP STA |
| | 3 | Sub-1 | AMP PHY |
| | 4 | Sub-1 | AMP PHY, unidirectional, having only a direction from the relay apparatus to the AMP STA |
| | 5 | Sub-1 | AMP PHY, unidirectional, having only a direction from the AMP STA to the AP |
| | 6 | 2.4 | WPT |
| 3 | Link | Frequency band (GHz) | Description |
| | 1 | 2.4 | AMP PHY |
| | 2 | 2.4 | AMP PHY, unidirectional, having only a direction from the excitation apparatus to the AMP STA |
| | 3 | 2.4 | AMP PHY |
| | 4 | 2.4 | AMP PHY, unidirectional, having only a direction from the relay apparatus to the AMP STA |
| | 5 | 2.4 | AMP PHY, unidirectional, having only a direction from the AMP STA to the AP |
| | 6 | 2.4 | WPT |
| 4 | Link | Frequency band (GHz) | Description |
| | 1 | 2.4 | AMP PHY |
| | 2 | 2.4 | AMP PHY, unidirectional, having only a direction from the excitation apparatus to the AMP STA |
| | 3 | 2.4 | AMP PHY |
| | 4 | 2.4 | AMP PHY, unidirectional, having only a direction from the relay apparatus to the AMP STA |
| | 5 | 2.4 | AMP PHY, unidirectional, having only a direction from the AMP STA to the AP |
| | 6 | Sub-1 | WPT |
| 5 | Link | Frequency band (GHz) | Description |
| | 1 | Sub-1 | AMP PHY |
| | 2 | Sub-1 | AMP PHY, bidirectional |
| | 3 | Sub-1 | AMP PHY |
| | 4 | Sub-1 | AMP PHY, unidirectional, having only a direction from the relay apparatus to the AMP STA |
| | 5 | Sub-1 | AMP PHY, unidirectional, having only a direction from the AMP STA to the AP |
| | 6 | Sub-1 | WPT |
| 6 | Link | Frequency band (GHz) | Description |
| | 1 | Sub-1 | AMP PHY |
| | 2 | Sub-1 | AMP PHY, unidirectional, having only a direction from the excitation apparatus to the AMP STA |
| | 3 | Sub-1 | AMP PHY |
| | 4 | Sub-1 | AMP PHY, bidirectional |
| | 5 | Sub-1 | AMP PHY, unidirectional, having only a direction from the AMP STA to the AP |
| | 6 | Sub-1 | WPT |
| 7 | Link | Frequency band (GHz) | Description |
| | 1 | Sub-1 | AMP PHY |
| | 2 | Sub-1 | AMP PHY, bidirectional |
| | 3 | Sub-1 | AMP PHY |
| | 4 | Sub-1 | AMP PHY, bidirectional |
| | 5 | Sub-1 | AMP PHY, unidirectional, having only a direction from the AMP STA to the AP |
| | 6 | Sub-1 | WPT |
| 8 | Link | Frequency band (GHz) | Description |
| | 1 | Sub-1 | AMP PHY |
| | 2 | Sub-1 | AMP PHY, bidirectional |
| | 3 | Sub-1 | AMP PHY |
| | 4 | Sub-1 | AMP PHY, unidirectional, having only a direction from the relay apparatus to the AMP STA |
| | 5 | Sub-1 | AMP PHY, unidirectional, having only a direction from the AMP STA to the AP |
| | 6 | 2.4 | WPT |
| 9 | Link | Frequency band (GHz) | Description |
| | 1 | Sub-1 | AMP PHY |
| | 2 | Sub-1 | AMP PHY, unidirectional, having only a direction from the excitation apparatus to the AMP STA |
| | 3 | Sub-1 | AMP PHY |
| | 4 | Sub-1 | AMP PHY, bidirectional |
| | 5 | Sub-1 | AMP PHY, unidirectional, having only a direction from the AMP STA to the AP |
| | 6 | 2.4 | WPT |
| 10 | Link | Frequency band (GHz) | Description |
| | 1 | Sub-1 | AMP PHY |
| | 2 | Sub-1 | AMP PHY, bidirectional |
| | 3 | Sub-1 | AMP PHY |
| | 4 | Sub-1 | AMP PHY, bidirectional |
| | 5 | Sub-1 | AMP PHY, unidirectional, having only a direction from the AMP STA to the AP |
| | 6 | 2.4 | WPT |
| | 6 | 2.4 | WPT |
| 11 | Link | Frequency band (GHz) | Description |
| | 1 | 2.4 | AMP PHY |
| | 2 | 2.4 | AMP PHY, bidirectional |
| | 3 | 2.4 | AMP PHY |
| | 4 | 2.4 | AMP PHY, unidirectional, having only a direction from the relay apparatus to the AMP STA |
| | 5 | 2.4 | AMP PHY, unidirectional, having only a direction from the AMP STA to the AP |
| | 6 | 2.4 | WPT |
| 12 | Link | Frequency band (GHz) | Description |
| | 1 | 2.4 | AMP PHY |
| | 2 | 2.4 | AMP PHY, unidirectional, having only a direction from the excitation apparatus to the AMP STA |
| | 3 | 2.4 | AMP PHY |
| | 4 | 2.4 | AMP PHY, bidirectional |
| | 5 | 2.4 | AMP PHY, unidirectional, having only a direction from the AMP STA to the AP |
| | 6 | 2.4 | WPT |
| 13 | Link | Frequency band (GHz) | Description |
| | 1 | 2.4 | AMP PHY |
| | 2 | 2.4 | AMP PHY, bidirectional |
| | 3 | 2.4 | AMP PHY |
| | 4 | 2.4 | AMP PHY, unidirectional, having only a direction from the relay apparatus to the AMP STA |
| | 5 | 2.4 | AMP PHY, unidirectional, having only a direction from the AMP STA to the AP |
| | 6 | Sub-1 | WPT |
| 14 | Link | Frequency band (GHz) | Description |
| | 1 | 2.4 | AMP PHY |
| | 2 | 2.4 | AMP PHY, unidirectional, having only a direction from the excitation apparatus to the AMP STA |
| | 3 | 2.4 | AMP PHY |
| | 4 | 2.4 | AMP PHY, bidirectional |
| | 5 | 2.4 | AMP PHY, unidirectional, having only a direction from the AMP STA to the AP |
| | 6 | Sub-1 | WPT |
| 15 | Link | Frequency band (GHz) | Description |
| | 1 | 2.4 | AMP PHY |
| | 2 | 2.4 | AMP PHY, bidirectional |
| | 3 | 2.4 | AMP PHY |
| | 4 | 2.4 | AMP PHY, bidirectional |
| | 5 | 2.4 | AMP PHY, unidirectional, having only a direction from the AMP STA to the AP |
| | 6 | Sub-1 | WPT |

For specific descriptions of Table 2, refer to the descriptions in the foregoing topology structure 5 to topology structure 8. Details are not described herein again.

### Topology structure 9

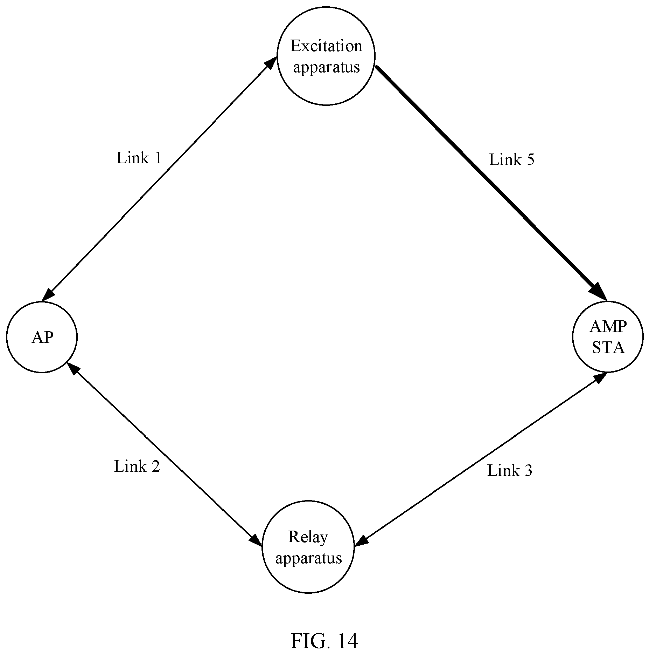

FIG. 14 is a diagram of a topology structure of a communication system according to an embodiment of this application. As shown in FIG. 14, a link 1 (link 1) to a link 3 (link 3) may all be communication links, and a link 5 (link 5) may be a WPT link. The link 1 to the link 3 are all bidirectional links, and there is no communication link between an excitation apparatus and an AMP STA. Although there is no communication link between the excitation apparatus and the AMP STA, the excitation apparatus may send an excitation signal and a WPT signal by using the link 5.

In an example 14A, all the link 1 to the link 3 and the link 5 may support a frequency band of sub-1 GHz.

In another example 14B, all the link 1 to the link 3 may support a frequency band of sub-1 GHz, and the link 5 may support a frequency band of 2.4 GHz.

In still another example 14C, all the link 1 to the link 3 and the link 5 may support a frequency band of 2.4 GHz.

In still another example 14D, all the link 1 to the link 3 may support a frequency band of 2.4 GHz, and the link 5 may support a frequency band of sub-1 GHz.

For example, the AMP STA may feed back ACK information by using the link 3. FIG. 14 shows an example in which the link 3 is a bidirectional link. The link 3 may alternatively be a unidirectional communication link from the relay apparatus to the AMP STA, which is not shown one by one herein.

For related descriptions of the frequency band, refer to the foregoing example 1A to example 1D. Details are not described herein again.

For related descriptions of a PPDU format, refer to the descriptions in the foregoing topology structure 1. Details are not described herein again.

For related descriptions of occupation indication information, refer to the descriptions in the foregoing topology structure 1. Details are not described herein again.

For descriptions of the communication method in the topology structure 9, refer to FIG. 11b, FIG. 9b, FIG. 4b, FIG. 5b, or the like. Details are not shown herein again.

For the topology structure 9, there is no communication link between the AMP STA and the excitation apparatus. Therefore, a receive end of a reflected signal is different from a transmit end of the excitation signal, so that a problem of backscatter self-interference can be effectively resolved, and difficulty of processing a signal by the AP can be reduced.

For the topology structure 9, the AMP STA may send information to the AP by using the relay apparatus, and receive information from the AP by using the relay apparatus. Downlink coverage can be increased by using the relay apparatus, so that a problem of unbalanced uplink and downlink can be effectively resolved by using the topology structure 9.

### Topology structure 10

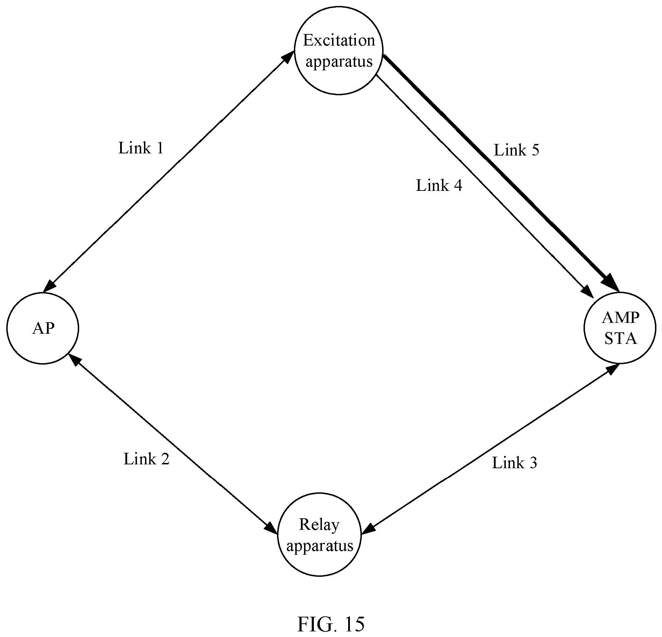

FIG. 15 is a diagram of a topology structure of a communication system according to an embodiment of this application. As shown in FIG. 15, a link 1 (link 1) to a link 4 (link 4) may all be communication links, and a link 5 (link 5) may be a WPT link. The link 1 to the link 3 are all bidirectional links, and the link 4 is a unidirectional communication link from an excitation apparatus to an AMP STA.

Certainly, the link 4 may alternatively be a unidirectional communication link (not shown in FIG. 15) from the AMP STA to the excitation apparatus, or the link 4 is a bidirectional link (not shown in FIG. 15).

For related descriptions of the frequency band, refer to the foregoing example 14A to example 14D and the like. Details are not described herein again.

For related descriptions of a PPDU format, refer to the descriptions in the foregoing topology structure 1. Details are not described herein again.

For related descriptions of occupation indication information, refer to the descriptions in the foregoing topology structure 1. Details are not described herein again.

For descriptions of the communication method in the topology structure 10, refer to FIG. 11b, FIG. 9b, FIG. 4b, FIG. 5b, or the like. Details are not shown herein again.

For the topology structure 10, the AMP STA may send information to the AP by using the relay apparatus, and receive information from the AP by using the relay apparatus. Downlink coverage can be increased by using the relay apparatus, so that a problem of unbalanced uplink and downlink can be effectively resolved by using the topology structure 10.

For the topology structure 10, because the link 4 is a unidirectional communication link from the excitation apparatus to the AMP STA, when the excitation apparatus sends an excitation signal, a receive end of a reflected signal obtained after the excitation signal is reflected by the AMP STA may be the relay apparatus, that is, a transmit end and a receive end of backscatter communication are not a same device. Therefore, the foregoing topology structure 10 can effectively resolve a problem of backscatter self-interference, and can reduce difficulty of processing a signal by the AP.

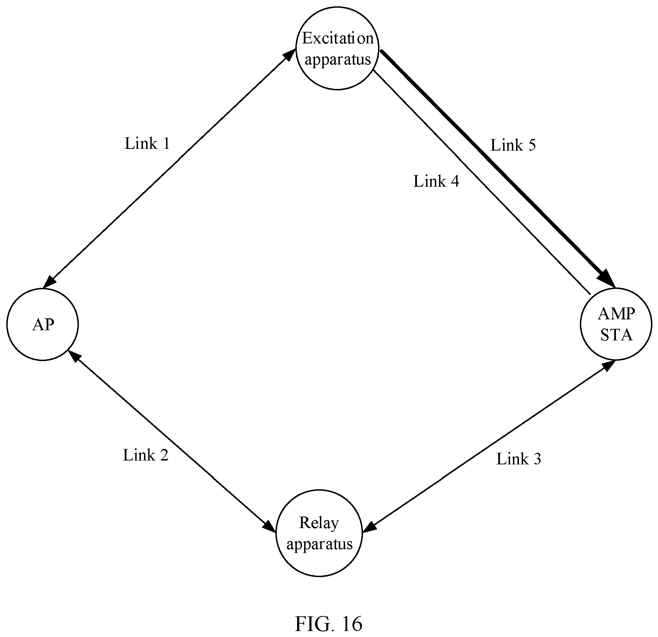

FIG. 16 is a diagram of a topology structure of a communication system according to an embodiment of this application. A direction of a link 4 is not shown in the topology structure shown in FIG. 16. For the direction of the link 4, refer to descriptions of the topology structure 9 and the topology structure 10, or refer to descriptions of Table 3. For other descriptions of Table 3, refer to Table 1 or Table 2. Details are not described herein again.

**Table 3**

| Configuration | Description | | |
|---|---|---|---|
| 1 | Link | Frequency band (GHz) | Description |
| | 1 | Sub-1 | AMP PHY |
| | 2 | Sub-1 | AMP PHY |
| | 3 | Sub-1 | AMP PHY |
| | 4 | Not existent | Not existent |
| | 5 | Sub-1 | WPT |
| 2 | Link | Frequency band (GHz) | Description |
| | 1 | 2.4 | AMP PHY |
| | 2 | 2.4 | AMP PHY |
| | 3 | 2.4 | AMP PHY |
| | 4 | Not existent | Not existent |
| | 5 | 2.4 | WPT |
| 3 | Link | Frequency band (GHz) | Description |
| | 1 | Sub-1 | AMP PHY |
| | 2 | Sub-1 | AMP PHY |
| | 3 | Sub-1 | AMP PHY |
| | 4 | Not existent | Not existent |
| | 5 | 2.4 | WPT |
| 4 | Link | Frequency band (GHz) | Description |
| | 1 | 2.4 | AMP PHY |
| | 2 | 2.4 | AMP PHY |
| | 3 | 2.4 | AMP PHY |
| | 4 | Not existent | Not existent |
| | 5 | Sub-1 | WPT |
| 5 | Link | Frequency band (GHz) | Description |
| | 1 | Sub-1 | AMP PHY |
| | 2 | Sub-1 | AMP PHY |
| | 3 | Sub-1 | AMP PHY |
| | 4 | Sub-1 | AMP PHY, bidirectional |
| | 5 | Sub-1 | WPT |
| 6 | Link | Frequency band (GHz) | Description |
| | 1 | Sub-1 | AMP PHY |
| | 2 | Sub-1 | AMP PHY |
| | 3 | Sub-1 | AMP PHY |
| | 4 | Sub-1 | AMP PHY, unidirectional, having only a direction from the excitation apparatus to the AMP STA |
| | 5 | Sub-1 | WPT |
| 7 | Link | Frequency band (GHz) | Description |
| | 1 | 2.4 | AMP PHY |
| | 2 | 2.4 | AMP PHY |
| | 3 | 2.4 | AMP PHY |
| | 4 | 2.4 | AMP PHY, bidirectional |
| | 5 | 2.4 | WPT |
| 8 | Link | Frequency band (GHz) | Description |
| | 1 | 2.4 | AMP PHY |
| | 2 | 2.4 | AMP PHY |
| | 3 | 2.4 | AMP PHY |
| | 4 | 2.4 | AMP PHY, unidirectional, having only a direction from the excitation apparatus to the AMP STA |
| | 5 | 2.4 | WPT |
| 9 | Link | Frequency band (GHz) | Description |
| | 1 | Sub-1 | AMP PHY |
| | 2 | Sub-1 | AMP PHY |
| | 3 | Sub-1 | AMP PHY |
| | 4 | Sub-1 | AMP PHY, bidirectional |
| | 5 | 2.4 | WPT |
| 10 | Link | Frequency band (GHz) | Description |
| | 1 | Sub-1 | AMP PHY |
| | 2 | Sub-1 | AMP PHY |
| | 3 | Sub-1 | AMP PHY |
| | 4 | Sub-1 | AMP PHY, unidirectional, having only a direction from the excitation apparatus to the AMP STA |
| | 5 | 2.4 | WPT |
| 11 | Link | Frequency band (GHz) | Description |
| | 1 | 2.4 | AMP PHY |
| | 2 | 2.4 | AMP PHY |
| | 3 | 2.4 | AMP PHY |
| | 4 | 2.4 | AMP PHY, bidirectional |
| | 5 | Sub-1 | WPT |
| 12 | Link | Frequency band (GHz) | Description |
| | 1 | 2.4 | AMP PHY |
| | 2 | 2.4 | AMP PHY |
| | 3 | 2.4 | AMP PHY |
| | 4 | 2.4 | AMP PHY, unidirectional, having only a direction from the excitation apparatus to the AMP STA |
| | 5 | Sub-1 | WPT |

For specific descriptions of Table 3, refer to the descriptions in the foregoing topology structure 9 and topology structure 10. Details are not described herein again.

### Topology structure 11

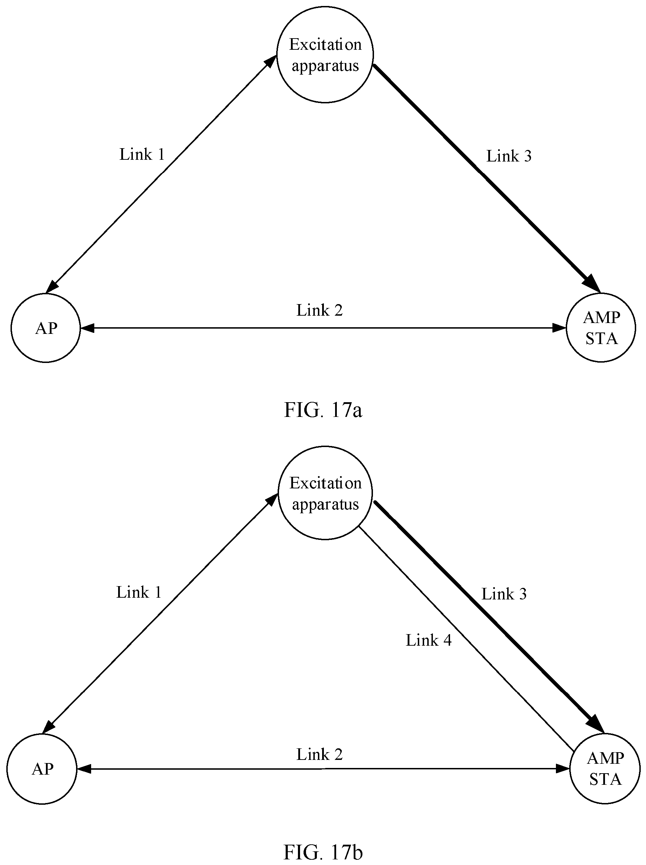

FIG. 17a is a diagram of a topology structure of a communication system according to an embodiment of this application. For the topology structure shown in FIG. 17a, refer to descriptions in Table 4.

**Table 4**

| Configuration | Description | | |
|---|---|---|---|
| 1 | Link | Frequency band (GHz) | Description |
| | 1 | Sub-1 | AMP PHY |
| | 2 | Sub-1 | AMP PHY |
| | 3 | Sub-1 | WPT |
| 2 | Link | Frequency band (GHz) | Description |
| | 1 | 2.4 | AMP PHY |
| | 2 | 2.4 | AMP PHY |
| | 3 | 2.4 | WPT |
| 3 | Link | Frequency band (GHz) | Description |
| | 1 | 2.4 | AMP PHY |
| | 2 | 2.4 | AMP PHY |
| | 3 | Sub-1 | WPT |
| 4 | Link | Frequency band (GHz) | Description |
| | 1 | Sub-1 | AMP PHY |
| | 2 | Sub-1 | AMP PHY |
| | 3 | 2.4 | WPT |

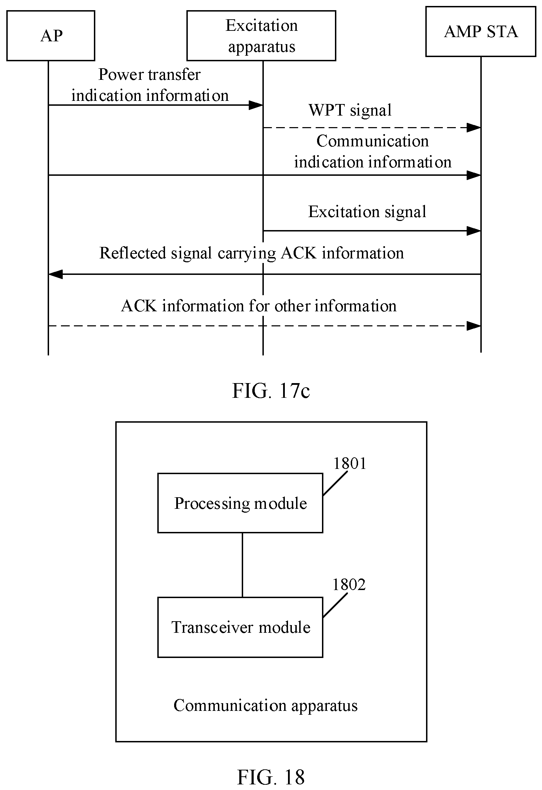

As shown in FIG. 17a, a link 1 (link 1) to a link 2 (link 2) may all be communication links, and a link 3 (link 3) may be a WPT link. The link 1 to the link 2 are all bidirectional links. For example, the excitation apparatus may transmit an excitation signal and a WPT signal by using the link 3. For the topology structure shown in FIG. 17a, a problem of backscatter self-interference can be effectively resolved. FIG. 17c is a schematic flowchart of a communication method according to an embodiment of this application. The communication method may be applied to the topology structure shown in FIG. 17a. A reflected signal sent by the AMP STA may carry ACK information for communication indication information. For example, the reflected signal may further carry other information. In this case, for example, the AP may send ACK information for the other information. For related descriptions of FIG. 17c, refer to the foregoing method. Details are not described herein again.

As shown in FIG. 17b, a link 4 may further exist between the excitation apparatus and the AMP STA. For example, the link 4 may be a unidirectional communication link from the excitation apparatus to the AMP STA, or a unidirectional communication link from the AMP STA to the excitation apparatus, or a bidirectional link.

In the foregoing topology structures and corresponding communication methods, parts described in detail in some topology structures may not be described in detail in some other topology structures, and parts described in detail in some communication methods are not described in detail in some other methods. Therefore, for parts that are not described in detail in the foregoing topology structures or communication methods, refer to other topology structures or communication methods.

A communication apparatus provided in an embodiment of this application is described below.

In this application, the communication apparatus is divided into function modules based on the foregoing method embodiments. For example, each function module may be divided to each corresponding function, or two or more functions may be integrated into one processing module. The integrated module may be implemented in a form of hardware, or may be implemented in a form of a software functional module. It should be noted that, in this application, module division is an example, and is merely a logical function division. In actual implementation, another division manner may be used. The following describes in detail communication apparatuses in embodiments of this application with reference to FIG. 18 to FIG. 20.

FIG. 18 is a diagram of a structure of a communication apparatus according to an embodiment of this application. As shown in FIG. 18, the communication apparatus includes a processing module 1801 and a transceiver module 1802. The transceiver module 1802 may implement a corresponding communication function, and the processing module 1801 is configured to implement a corresponding processing function. For example, the transceiver module 1802 may also be referred to as an interface, a communication interface, a communication module, or the like.

In some embodiments of this application, the communication apparatus may be configured to perform an action performed by the AMP STA in the foregoing method embodiments. In this case, the AMP STA may be an AMP device, or a chip, a functional module, or the like that can be configured in the device. The transceiver module 1802 is configured to perform receiving and sending-related operations of the AMP STA in the foregoing method embodiments, and the processing module 1801 is configured to perform processing-related operations of the AMP STA in the foregoing method embodiments.

For example, the processing module 1801 may be configured to: receive or input a WPT signal by using the transceiver module 1802, and receive or input communication indication information by using the transceiver module 1802. For example, the processing module 1801 may be configured to: receive or input an excitation signal by using the transceiver module 1802, and send or output a reflected signal of the excitation signal.

For example, the processing module 1801 may generate a reflected signal based on the excitation signal.

FIG. 18 is reused. In some other embodiments of this application, the communication apparatus may be configured to perform an action performed by the excitation apparatus (or the first communication apparatus) in the foregoing method embodiments. In this case, the communication apparatus may be an energizer (or a device), or a chip, a functional module, or the like that can be configured in the energizer (or the device). The transceiver module 1802 is configured to perform receiving and sending-related operations of the excitation apparatus (or the first communication apparatus) in the foregoing method embodiments. The processing module 1801 is configured to perform processing-related operations of the excitation apparatus (or the first communication apparatus) in the foregoing method embodiments.

For example, the transceiver module 1802 may be configured to receive or input power transfer indication information; and the processing module 1801 may be configured to send or output a WPT signal based on the power transfer indication information.

For example, the transceiver module 1802 may be configured to receive or input indication information.

For example, the transceiver module 1802 may be further configured to send or output an excitation signal.

For example, the transceiver module 1802 may be further configured to send or output occupation indication information.

FIG. 18 is reused. In some other embodiments of this application, the communication apparatus may be configured to perform an action performed by the relay apparatus (or the first communication apparatus) in the foregoing method embodiments. In this case, the communication apparatus may be a relay device, or a chip, a functional module, or the like that can be configured in the relay device. The transceiver module 1802 is configured to perform receiving and sending-related operations of the relay apparatus (or the first communication apparatus) in the foregoing method embodiments. The processing module 1801 is configured to perform processing-related operations of the relay apparatus (or the first communication apparatus) in the foregoing method embodiments.

For example, the transceiver module 1802 may be configured to receive or input communication indication information (or indication information).

FIG. 18 is reused. In some other embodiments of this application, the communication apparatus may be configured to perform an action performed by the AP in the foregoing method embodiments. In this case, the communication apparatus may be a Wi-Fi device, or a chip, a functional module, or the like that can be configured in the device. The transceiver module 1802 is configured to perform receiving and sending-related operations of the AP in the foregoing method embodiments, and the processing module 1801 is configured to perform processing-related operations of the AP in the foregoing method embodiments.

For example, the transceiver module 1802 may be configured to send or output power transfer indication information. For example, the transceiver module 1802 may be configured to send or output communication indication information.

Optionally, in the foregoing embodiments, the communication apparatus may further include a storage module. The storage module may be configured to store instructions and/or data. The processing module 1801 may read the instructions and/or the data in the storage module, so that the communication apparatus implements the foregoing method embodiments.

In the foregoing embodiments, for specific descriptions of terms or steps such as the WPT signal, the excitation signal, the reflected signal, the WPT link, the communication link, the frequency band, and the PPDU, refer to the descriptions in the foregoing method embodiments. Details are not described herein again.

Specific descriptions of the transceiver module and the processing module shown in the foregoing embodiments are merely examples. For specific functions or steps performed by the transceiver module and the processing module, refer to the foregoing method embodiments. Details are not described herein again.

The foregoing describes the communication apparatus in embodiments of this application. The following describes a possible product form of the communication apparatus. Any form of product that has a function of the communication apparatus in FIG. 18 falls within the protection scope of embodiments of this application. The following descriptions are merely examples, and a product form of the communication apparatus in embodiments of this application is not limited thereto.

In a possible implementation, in the communication apparatus shown in FIG. 18, the processing module 1801 may be one or more processors, and the transceiver module 1802 may be a transceiver; or the transceiver module 1802 may be a sending module and a receiving module, the sending module may be a transmitter, the receiving module may be a receiver, and the sending module and the receiving module are integrated into one device, for example, a transceiver. In embodiments of this application, the processor and the transceiver may be coupled, or the like. A connection manner between the processor and the transceiver is not limited in embodiments of this application. In a process of performing the foregoing method, a process of sending information in the foregoing method may be a process of outputting the information by the processor. When outputting the information, the processor outputs the information to a transceiver, so that the transceiver transmits the information. After the information is outputted by the processor, other processing may further need to be performed on the information before the information arrives at the transceiver. Similarly, a process of receiving information in the foregoing method may be a process of receiving the input information by the processor. When the processor receives the input information, the transceiver receives the information and inputs the information to the processor. Further, after the transceiver receives the information, other processing may need to be performed on the information before the information is input into the processor.

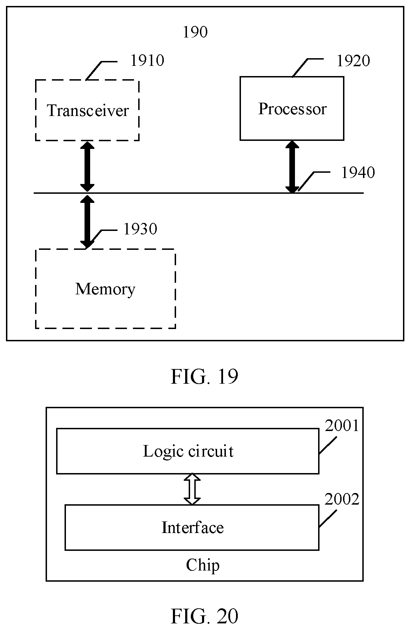

As shown in FIG. 19, the communication apparatus 190 includes one or more processors 1920 and a transceiver 1910.

FIG. 19 is reused. In some embodiments of this application, the communication apparatus may be configured to perform the steps, the methods, or the functions performed by the AMP STA.

FIG. 19 is reused. In some other embodiments of this application, the communication apparatus is configured to perform the steps, the methods, or the functions performed by the excitation apparatus.

FIG. 19 is reused. In still some embodiments of this application, the communication apparatus is configured to perform the steps, the methods, or the functions performed by the relay apparatus.

FIG. 19 is reused. In still some embodiments of this application, the communication apparatus is configured to perform the steps, the methods, or the functions performed by the first communication apparatus.

FIG. 19 is reused. In still some embodiments of this application, the communication apparatus is configured to perform the steps, the methods, or the functions performed by the AP.

For example, the processor 1920 may be configured to perform a function or a step implemented by the processing module 1801 shown in FIG. 18, and the transceiver 1910 may be configured to perform a function or a step implemented by the transceiver module 1802 shown in FIG. 18. For specific descriptions of the processor 1920 and the transceiver 1910, refer to FIG. 18 or the method embodiments shown above. Details are not described herein again.

In various implementations of the communication apparatus shown in FIG. 19, the transceiver may include a receiver and a transmitter, the receiver is configured to perform the receiving function (or operation), and the transmitter is configured to perform the transmitting function (or operation). In addition, the transceiver is configured to communicate with another device/apparatus through a transmission medium.

Optionally, the communication apparatus 190 may further include one or more memories 1930, configured to store program instructions and/or data. The memory 1930 is coupled to the processor 1920. The coupling in embodiments of this application may be an indirect coupling or a communication connection between communication apparatuses, units, or modules in an electrical form, a mechanical form, or another form, and is used for information exchange between the communication apparatuses, the units, or the modules. The processor 1920 may cooperate with the memory 1930. The processor 1920 may execute the program instructions stored in the memory 1930. Optionally, at least one of the one or more memories may be included in the processor.

In embodiments of this application, a specific connection medium between the transceiver 1910, the processor 1920, and the memory 1930 is not limited. In embodiments of this application, in FIG. 19, the memory 1930, the processor 1920, and the transceiver 1910 are connected to each other through a bus 1940. The bus is represented by using a thick line in FIG. 19. A manner of a connection between other components is only schematically described, but is not used as a limitation. The bus may be classified into an address bus, a data bus, a control bus, and the like. For ease of representation, only one bold line is used to represent the bus in FIG. 19, but this does not mean that there is only one bus or only one type of bus.

In this embodiment of this application, the processor may be a general-purpose processor, a digital signal processor, an application-specific integrated circuit, a field programmable gate array or another programmable logic device, a discrete gate or transistor logic device, a discrete hardware component, or the like. The processor can implement or execute the methods, the steps, and the logical block diagrams disclosed in embodiments of this application. The general purpose processor may be a microprocessor or any conventional processor or the like. The steps of the methods disclosed in combination with embodiments of this application may be directly implemented by a hardware processor, or may be implemented by using a combination of hardware and software modules in the processor, or the like.

In this embodiment of this application, the memory may include but is not limited to a nonvolatile memory such as a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), or a portable read-only memory (Compact Disc Read-Only Memory, CD-ROM). The memory is any storage medium that can be used to carry or store program code in a form of an instruction or a data structure and that can be read and/or written by a computer (for example, the communication apparatus shown in this application). However, this application is not limited thereto. The memory in embodiments of this application may alternatively be a circuit or any other apparatus that can implement a storage function, and is configured to store the program instructions and/or the data.

For example, the processor 1920 is mainly configured to: process a communication protocol and communication data, control the entire communication apparatus, execute a software program, and process data of the software program. The memory 1930 is mainly configured to store a software program and data. The transceiver 1910 may include a control circuit and an antenna. The control circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user.

For example, after the communication apparatus is powered on, the processor 1920 may read the software program in the memory 1930, interpret and execute instructions of the software program, and process the data of the software program. When data needs to be sent in a wireless manner, after performing baseband processing on the to-be-sent data, the processor 1920 outputs a baseband signal to the radio frequency circuit; and the radio frequency circuit performs radio frequency processing on the baseband signal and then sends the radio frequency signal to the outside in a form of an electromagnetic wave through the antenna. When data is sent to the communication apparatus, the radio frequency circuit receives a radio frequency signal through the antenna, converts the radio frequency signal into a baseband signal, and outputs the baseband signal to the processor 1920. The processor 1920 converts the baseband signal into data, and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

The communication apparatus shown in this embodiment of this application may further have more components than those in FIG. 19, or the like. This is not limited in this embodiment of this application. The methods performed by the processor and the transceiver are merely examples. For specific steps performed by the processor and the transceiver, refer to the methods described above.

In another possible implementation, in the communication apparatus shown in FIG. 18, the processing module 1801 may be one or more logic circuits, and the transceiver module 1802 may be an input/output interface that is also referred to as a communication interface, an interface circuit, an interface, or the like. Alternatively, the transceiver module 1802 may be a sending module and a receiving module. The sending module may be an output interface, and the receiving module may be an input interface. The sending module and the receiving module are integrated into one module, for example, an input/output interface. As shown in FIG. 20, the communication apparatus shown in FIG. 20 includes a logic circuit 2001 and an interface 2002. In other words, the processing module 1801 may be implemented by the logic circuit 2001, and the transceiver module 1802 may be implemented by the interface 2002. The logic circuit 2001 may be a chip, a processing circuit, an integrated circuit, a system on chip (system on chip, SoC) chip, or the like. The interface 2002 may be a communication interface, an input/output interface, a pin, or the like. For example, FIG. 20 is an example in which the communication apparatus is a chip. The chip includes the logic circuit 2001 and the interface 2002.

In this embodiment of this application, the logic circuit and the interface may be coupled to each other. A specific manner of connection between the logic circuit and the interface is not limited in this embodiment of this application. For example, the logic circuit 2001 may be configured to perform a function or a step implemented by the processing module 1801 shown in FIG. 18, and the interface 2002 may be configured to perform a function or a step implemented by the transceiver module 1802 shown in FIG. 18. For specific descriptions of the logic circuit 2001 and the interface 2002, refer to FIG. 18 or the method embodiments shown above. Details are not described herein again.

The communication apparatus shown in embodiments of this application may implement the methods according to embodiments of this application in a form of hardware, or may implement the methods according to embodiments of this application in a form of software. This is not limited in embodiments of this application.

An embodiment of this application further provides a communication system. The communication system includes an AMP STA and an excitation apparatus; or the communication system includes an AMP STA and a first communication apparatus; or the communication system includes an AMP STA, an excitation apparatus, and a relay apparatus. Optionally, the communication system may further include an AP.

In addition, this application further provides a computer program. The computer program is configured to implement operations and/or processing performed by communication apparatuses in the method provided in this application.

This application further provides a computer-readable storage medium. The computer-readable storage medium stores computer code. When the computer code is run on a computer, the computer is enabled to perform operations and/or processing performed by the communication apparatuses in the methods provided in this application.

This application further provides a computer program product. The computer program product includes computer code or a computer program. When the computer code or the computer program is run on a computer, operations and/or processing performed by the communication apparatuses in the methods provided in this application are/is performed.

In the several embodiments provided in this application, it should be understood that the disclosed system, communication apparatus, and method may be implemented in other manners. For example, the described communication apparatus embodiment is merely an example. For example, the foregoing module division is merely logical function division and there may be another division manner during actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the communication apparatuses or modules may be implemented in electronic, mechanical, or other forms.

The modules described as separate parts may or may not be physically separate, and parts displayed as modules may or may not be physical modules, may be located in one position, or may be distributed on a plurality of network modules. Some or all of the modules may be selected based on an actual requirement to achieve the technical effects of the solutions provided in embodiments of this application.

In addition, functional modules in embodiments of this application may be integrated into one processing module, or each of the modules may exist alone physically, or two or more modules may be integrated into one module. The integrated module may be implemented in a form of hardware, or may be implemented in a form of a software functional module.

When the integrated module is implemented in the form of a software functional module and sold or used as an independent product, the integrated module may be stored in a computer-readable storage medium. Based on such an understanding, the technical solutions of this application essentially, or the part contributing to the conventional technologies, or all or some of the technical solutions may be implemented in a form of a software product. The computer software product is stored in a readable storage medium and includes a plurality of instructions for instructing a computer device (which may be a personal computer, a server, or a network device) to perform all or some of the steps of the methods described in embodiments of this application. The readable storage medium includes any medium that can store program code, such as a USB flash drive, a removable hard disk, a read-only memory (read-only memory, ROM), a random access memory (random access memory, RAM), a magnetic disk, or an optical disc.

## Claims

1. A communication method, wherein the method is applied to an ambient power AMP station STA, and the method comprises:
receiving a wireless power transfer WPT signal, and receiving communication indication information, wherein the communication indication information is information for indicating the AMP STA to perform communication; and
receiving an excitation signal, and sending a reflected signal of the excitation signal.

2. The method according to claim 1, wherein
the receiving the WPT signal comprises: receiving the WPT signal from a first communication apparatus;
the receiving the communication indication information comprises: receiving the communication indication information from the first communication apparatus; and
the receiving the excitation signal comprises: receiving the excitation signal from the first communication apparatus.

3. The method according to claim 2, wherein the sending the reflected signal of the excitation signal comprises:
sending the reflected signal of the excitation signal to an access point AP.

4. The method according to claim 1, wherein
the receiving the WPT signal comprises: receiving the WPT signal from an excitation apparatus;
the receiving the communication indication information comprises: receiving the communication indication information from a relay apparatus; or receiving the communication indication information from an access point AP; and
the receiving the excitation signal comprises: receiving the excitation signal from the excitation apparatus.

5. The method according to claim 4, wherein the sending the reflected signal of the excitation signal comprises:
sending the reflected signal of the excitation signal to the relay apparatus.

6. The method according to claim 4, wherein the sending the reflected signal of the excitation signal comprises:
sending the reflected signal of the excitation signal to the AP.

7. The method according to any one of claims 1 to 6, wherein a link for transmitting the WPT signal is a WPT link, or a link for transmitting the excitation signal is a communication link.

8. The method according to claim 7, wherein a frequency band supported by the communication link is different from a frequency band supported by the WPT link.

9. The method according to claim 7, wherein a frequency band supported by the communication link is the same as a frequency band supported by the WPT link, and the communication link is a unidirectional communication link.

10. A communication method, wherein the method is applied to an excitation apparatus, and the method comprises:
receiving power transfer indication information from an access point AP, wherein the power transfer indication information is information for indicating an ambient power AMP station STA to receive a wireless power transfer WPT signal; and
sending a WPT signal to the AMP STA based on the power transfer indication information.

11. The method according to claim 10, wherein the receiving the power transfer indication information from the access point AP comprises:
receiving indication information, wherein the indication information comprises the power transfer indication information and communication indication information, and the communication indication information is information for indicating the AMP STA to perform communication.

12. The method according to claim 10 or 11, wherein the power transfer indication information comprises at least one of an identifier of the AMP STA or wake-up information of the AMP STA.

13. The method according to claim 12, wherein the power transfer indication information further comprises at least one of the following: transmission time of the WPT signal, waveform information of the WPT signal, and wake-up information of the excitation apparatus.

14. The method according to any one of claims 11 to 13, wherein the communication indication information comprises at least one of the following:
control information, scheduling information, and a data type to be reported by the AMP STA.

15. The method according to any one of claims 10 to 14, wherein sending the WPT signal to the AMP STA based on the power transfer indication information comprises:
sending the WPT signal to the AMP STA on a WPT link based on the power transfer indication information.

16. The method according to any one of claims 11 to 15, wherein the method further comprises:
sending an excitation signal to the AMP STA on a communication link.

17. The method according to claim 15 or 16, wherein a frequency band supported by the communication link is different from a frequency band supported by the WPT link.

18. The method according to claim 17, wherein the method further comprises:
sending occupation indication information on the communication link, wherein the occupation indication information indicates that the communication link is occupied.

19. The method according to claim 15 or 16, wherein a frequency band supported by the communication link is the same as a frequency band supported by the WPT link, and the communication link is a unidirectional communication link.

20. The method according to any one of claims 15 to 19, wherein the frequency band supported by the WPT link comprises 2.4 GHz or lower than 1 GHz.

21. A communication apparatus, comprising a module configured to perform the method according to any one of claims 1 to 9.

22. A communication apparatus, comprising a module configured to perform the method according to any one of claims 10 to 20.

23. A communication apparatus, comprising a processor, wherein the processor is configured to perform the method according to any one of claims 1 to 20.

24. A communication apparatus, comprising a logic circuit and an interface, wherein the logic circuit is coupled to the interface; and
the interface is configured to input and/or output information, and the logic circuit is configured to perform the method according to any one of claims 1 to 9, or the logic circuit is configured to perform the method according to any one of claims 10 to 20.

25. A computer-readable storage medium, wherein the computer-readable storage medium is configured to store a computer program, and when the computer program is executed, the method according to any one of claims 1 to 20 is performed.

26. A computer program product, wherein when the computer program product is executed, the method according to any one of claims 1 to 20 is performed.

27. A communication system, wherein the communication system comprises an ambient power AMP station STA and an excitation apparatus, the AMP STA is configured to perform the method according to any one of claims 1 to 9, and the excitation apparatus is configured to perform the method according to any one of claims 10 to 20.
